# EUROPEAN PATENT APPLICATION

(11) **EP 4 826 713 A1**
(43) Date of publication of application: **21.10.2026**
(21) Application number: 25738317.4
(22) Date of filing: 03.01.2025
(51) Int. Cl.: G10K 11/178

(54) **NOISE CANCELLATION METHOD AND APPARATUS, AND VEHICLE**

(30) Priority: 08.01.2024 CN 202410035289
(71) Applicant: Yinwang Intelligent Technologies Co., Ltd., Shenzhen, Guangdong 518110 (CN)
(72) Inventor: WANG, Xinchuang, Shenzhen, Guangdong 518110 (CN); QIU, Xiaojun, Shenzhen, Guangdong 518110 (CN)
(74) Representative: Henselmann, Alexander Gerhard
(86) International application number: PCT/CN2025/070324
(87) International publication number: WO 2025/148786

(57) **Abstract**

Provided are a noise cancellation method and apparatus, and a vehicle. The method includes: obtaining an input of a user, where the input indicates head areas (head area 1 to head area 6) in a cockpit; determining, based on the input, noise cancellation parameters associated with the head areas (head area 1 to head area 6); and performing noise cancellation based on the noise cancellation parameters. The method may be applied to an intelligent vehicle or an electric vehicle, so as to improve a noise cancellation effect, thereby helping improve listening experience of the user.

## Description

This application claims priority to Chinese Patent Application No. 202410035289.4, filed with the China National Intellectual Property Administration on January 8, 2024 and entitled "NOISE CANCELLATION METHOD AND APPARATUS, AND VEHICLE", which is incorporated herein by reference in its entirety.

### TECHNICAL FIELD

This application relates to the field of intelligent cockpit, and more specifically, to a noise cancellation method and apparatus, and a vehicle.

### BACKGROUND

An active noise cancellation system reduces noise in a limited area around an error microphone, forming a "silent zone". Due to different sitting postures and heights of users, when the head of a user is away from this area, the user may not experience any noise cancellation effect and may even experience additional noise.

### SUMMARY

This application provides a noise cancellation method and apparatus, and a vehicle, to help improve a noise cancellation effect, thereby helping improve listening experience of a user.

According to a first aspect, this application provides a noise cancellation method. The method includes: obtaining a first input of a user, where the first input indicates a first head area in a cockpit; determining, based on the first input, a first noise cancellation parameter associated with the first head area; and performing noise cancellation based on the first noise cancellation parameter.

Based on the foregoing technical solution, a head area where the user desires noise cancellation may be determined based on an input of the user, so that noise cancellation may be performed based on a noise cancellation parameter corresponding to the head area. In this way, the noise cancellation effect of a head area selected by the user can be improved, thereby helping improve listening experience of the user.

In this application, the noise cancellation parameter may reflect a sound transfer path, so that the noise cancellation parameter may also be referred to as a path parameter. By pre-calibrating and storing a mapping relationship between the noise cancellation parameter and the head area (or an area where a human ear is located), when an active noise cancellation function is used, a corresponding noise cancellation parameter is selected based on the head area, and the noise cancellation is performed based on the noise cancellation parameter, thereby improving the noise cancellation effect.

In some possible implementations, the first noise cancellation parameter may include at least one of a secondary path coefficient, a path coefficient of a propagation path from a secondary source speaker to a virtual microphone, and an estimation result of an observation path.

In some possible implementations, the performing noise cancellation based on the first noise cancellation parameter includes: performing noise cancellation on a first frequency band (for example, a low frequency band).

The foregoing method in the first aspect may be applied to a system comprising a cockpit domain controller and a digital signal processor.

With reference to the first aspect, in some implementations of the first aspect, before the obtaining the first input of the user, the method further includes: when it is detected that the user starts an application program of a preset type, controlling a prompt apparatus to prompt the user to select from a plurality of head areas, where the plurality of head areas include the first head area.

Based on the foregoing technical solution, when the user chooses to start the application of the preset type, the prompt apparatus may be triggered to prompt the user to select from the plurality of head areas. This makes it convenient to automatically trigger a prompt when the user uses some applications that require noise cancellation, thereby improving user experience when using the application of the preset type.

In some possible implementations, the application of the preset type may include an audio type application, a video type application, and a nap mode (or a sleep mode).

In some possible implementations, when it is detected that the user starts the application of the preset type, controlling the prompt apparatus to prompt the user to select from the plurality of head areas includes: when it is detected that the user starts the application of the preset type and the playback volume is less than or equal to a sound level threshold, controlling the prompt apparatus to prompt the user to select from the plurality of head areas.

With reference to the first aspect, in some implementations of the first aspect, before the obtaining the first input of the user, the method further includes: when a speed of a vehicle is greater than or equal to a first threshold, and/or when an intensity of a vibration signal detected by an accelerometer is greater than or equal to a second threshold, controlling the prompt apparatus to prompt the user to select from a plurality of head areas, where the plurality of head areas include the first head area.

Based on the foregoing technical solution, when the speed of the vehicle is greater than or equal to the first threshold and/or when the intensity of the vibration signal is greater than or equal to the second threshold, the prompt apparatus may be automatically triggered to prompt the user to select from the plurality of head areas. In this way, when it is determined, based on data collected by a sensor, that the noise cancellation is currently required, a prompt may be automatically triggered, thereby helping improve listening experience of the user.

In some possible implementations, before the obtaining the first input of the user, the method further includes: determining that all windows of the vehicle are in a closed state.

In some possible implementations, before the obtaining the first input of the user, the method further includes: determining that an air conditioner is in an off state, or determining that an air exhaust speed of an air conditioner is less than or equal to a preset air exhaust speed.

In some possible implementations, when it is determined that all the windows of the vehicle are in the closed state, or it is determined that the air conditioner is in the off state, or it is determined that the air exhaust speed of the air conditioner is less than or equal to the preset air exhaust speed, a display apparatus is controlled to display a first interface element, where the first interface element may be associated with a selection interface for the head area.

In some possible implementations, when it is determined that the window of the vehicle is in an open state, or it is determined that the air exhaust speed of the air conditioner is greater than the preset air exhaust speed, the display apparatus may be controlled to hide the first interface element.

Based on the foregoing technical solution, the display apparatus may be controlled, based on the state of the window or the air conditioner, to display or hide the first interface element. When the window is in the closed state or the air exhaust speed of the air conditioner is relatively low, the user may select the head area by using the first interface element displayed on the display apparatus, so that the listening effect of the user can be ensured.

With reference to the first aspect, in some possible implementations of the first aspect, before the obtaining the first input of the user, the method further includes: performing noise cancellation based on a second noise cancellation parameter, where the second noise cancellation parameter is associated with a second head area; obtaining first data collected by a sensor in the cockpit; and when it is determined, based on the first data, that a head position of the user is in the first head area, controlling the prompt apparatus to prompt the user to select from a plurality of head areas, where the plurality of head areas include the first head area.

Based on the foregoing technical solution, when it is determined, by using the data collected by the sensor, that the head area of the user changes, the prompt apparatus may be automatically triggered to prompt the user to select from the plurality of head areas. This makes it convenient for the user to notice a change of the head area in time, so that the user may select a new head area. The vehicle may determine, based on the head area newly selected by the user, the noise cancellation parameter, thereby helping improve listening experience of the user.

In some possible implementations, when it is determined, based on the first data, that the head position of the user is in the first head area, controlling the prompt apparatus to prompt the user to select from the plurality of head areas may also be understood as: when it is determined, based on the first data, that the head position of the user is not in the second head area, controlling the prompt apparatus to prompt the user to select from the plurality of head areas, or may be understood as: when it is determined, based on the first data, that the head position of the user is in an area other than the second head area, controlling the prompt apparatus to prompt the user to select from the plurality of head areas.

In some possible implementations, the second head area may be a head area previously selected by the user through the selection interface for the head area, or the second head area may be a head area previously memorized as a preference of the user, or the second head area may be a default head area (for example, an area around an error microphone on a seat headrest).

With reference to the first aspect, in some implementations of the first aspect, the method further includes: storing an association relationship between identification information of the user and the first head area.

Based on the foregoing technical solution, after the user selects a head area, the vehicle may store a correspondence between identification information of the user and a corresponding head area. In this way, the next time the user gets into the vehicle, the vehicle may determine, based on the identification information of the user, the noise cancellation parameter associated with the head area, so as to perform the noise cancellation. The user does not need to select the head area again, thereby avoiding an input process of the user, and helping improve user experience.

In some possible implementations, the identification information of the user may include at least one of facial information, voiceprint information, and iris information of the user.

With reference to the first aspect, in some implementations of the first aspect, before the obtaining the first input of the user, the method further includes: obtaining a first speech instruction of the user, where the first speech instruction instructs to adjust a noise cancellation area; and controlling, based on the first speech instruction, a first display apparatus to display a first display interface, where the first display apparatus is a display apparatus in a seat area where the user is located, the first display interface includes a plurality of head areas, and the plurality of head areas include the first head area; where the obtaining the first input of the user includes: obtaining a first touch input of the user on the first display interface or obtaining a second speech instruction of the user, where the first touch input or the second speech instruction indicates the first head area.

Based on the foregoing technical solution, the seat area where the user is located may be determined based on the speech instruction sent by the user, so that the display apparatus in the seat area may be controlled to display information about the plurality of head areas. This makes it convenient for the user to select the corresponding head area from the seat area where the user is located, thereby helping improve user experience.

With reference to the first aspect, in some implementations of the first aspect, before the obtaining the first input of the user, the method further includes: controlling a second display apparatus to display a second display interface, where the second display interface includes a first display area and a second display area, the first display area includes information about a plurality of seat areas, and the second display area includes the information about the plurality of head areas; the plurality of head areas include the first head area, the plurality of seat areas include a first seat area, and the first input indicates the first seat area and the first head area; where determining, based on the first input, the first noise cancellation parameter associated with the first area includes: determining, based on the first input, the first noise cancellation parameter associated with the first head area in the first seat area.

Based on the foregoing technical solution, information about the seat area and information about the head area may be displayed on a same display interface, making it convenient for the user to select a seat and a head area on that display interface.

With reference to the first aspect, in some implementations of the first aspect, before the obtaining the first input of the user, the method further includes: controlling a third display apparatus to display a third display interface, where the third display interface includes the information about the plurality of seat areas; obtaining a second touch input of the user on the third display interface, where the second touch input indicates a second seat area, and the plurality of seat areas include the second seat area; and controlling, based on the second touch input, the third display apparatus to display a fourth display interface, where the fourth display interface includes the information about the plurality of head areas in the second seat area, and the plurality of head areas include the first head area; where the obtaining the first input of the user includes: obtaining a third touch input of the user on the fourth display interface or obtaining a third voice input of the user, where the third touch input or the third voice input indicates the first head area.

Based on the foregoing technical solution, the vehicle may first control the display apparatus to display a display interface of the plurality of seat areas. After the user selects a seat area on the display interface of the plurality of seat areas, the display apparatus may be controlled to switch to a display interface displaying the plurality of head areas, so that the user may select the corresponding head area on the display interface of the plurality of head areas.

With reference to the first aspect, in some implementations of the first aspect, the obtaining the first input of the user includes: obtaining the first input of the user on an electronic device.

Based on the foregoing technical solution, the vehicle may also receive an instruction sent by the electronic device (for example, a mobile phone or a tablet), and the instruction may indicate the first input of the user on the electronic device. In this way, noise cancellation can be implemented through interaction among multiple devices, thereby helping improve listening experience of the user.

With reference to the first aspect, in some implementations of the first aspect, determining, based on the first input, the first noise cancellation parameter associated with the first head area includes: determining, based on the first input and a first mapping relationship, the first noise cancellation parameter, where the first mapping relationship includes a mapping relationship between the head area and the noise cancellation parameter.

Based on the foregoing technical solution, the vehicle may store the mapping relationship between the head area and the noise cancellation parameter in advance. When the first input of the user is obtained, the corresponding noise cancellation parameter may be determined based on the head area selected by the user and the mapping relationship, thereby implementing noise cancellation.

With reference to the first aspect, in some implementations of the first aspect, the method further includes: controlling the prompt apparatus to prompt the user with the head position of the user and the plurality of head areas, where the head position of the user is determined by second data collected by the sensor in the cockpit.

Based on the foregoing technical solution, the vehicle may control the prompt apparatus to display the head position of the user and the plurality of head areas. In this way, it can be convenient for the user to select, based on a real-time head position of the user and the plurality of head areas, a target head area from the plurality of head areas. This helps improve an accuracy of selecting the head area by the user, thereby helping improve the noise cancellation effect.

According to a second aspect, this application provides a noise cancellation method. The method includes: obtaining a first input of a user, where the first input indicates a first head area in a cockpit; and sending an instruction, where the instruction indicates the first head area.

The foregoing noise cancellation method in the second aspect can be applied to a cockpit domain controller.

In some possible implementations, sending the instruction includes: sending the instruction to a digital signal processor.

After receiving the instruction, the foregoing digital signal processor may determine, based on the instruction, a first noise cancellation parameter associated with the first head area, and perform noise cancellation based on the first noise cancellation parameter.

With reference to the second aspect, in some implementations of the second aspect, before the obtaining the first input of the user, the method further includes: when the user starts an application program of a preset type, controlling a prompt apparatus to prompt the user to select from a plurality of head areas, where the plurality of head areas include the first head area.

With reference to the second aspect, in some implementations of the second aspect, before the obtaining the first input of the user, the method further includes: when a speed of a vehicle is greater than or equal to a first threshold, and/or when an intensity of a vibration signal detected by an accelerometer is greater than or equal to a second threshold, controlling the prompt apparatus to prompt the user to select from a plurality of head areas, where the plurality of head areas include the first head area.

With reference to the second aspect, in some implementations of the second aspect, before the obtaining the first input of the user, the method further includes: receiving information about a second head area; obtaining first data collected by a sensor in the cockpit; and when it is determined, based on the first data, that a head position of the user is in the first head area, controlling the prompt apparatus to prompt the user to select from a plurality of head areas, where the plurality of head areas include the first head area.

In some possible implementations, receiving the information about the second head area includes: receiving the information about the second head area sent by the digital signal processor.

With reference to the second aspect, in some implementations of the second aspect, the method further includes: storing an association relationship between identification information of the user and the first head area.

With reference to the second aspect, in some implementations of the second aspect, before the obtaining the first input of the user, the method further includes: obtaining a first speech instruction of the user, where the first speech instruction instructs to adjust a noise cancellation area; and controlling, based on the first speech instruction, a first display apparatus to display a first display interface, where the first display apparatus is a display apparatus in a seat area where the user is located, the first display interface includes a plurality of head areas, and the plurality of head areas include the first head area; where the obtaining the first input of the user includes: obtaining a first touch input of the user on the first display interface or obtaining a second speech instruction of the user, where the first touch input or the second speech instruction indicates the first head area.

With reference to the second aspect, in some implementations of the second aspect, before the obtaining the first input of the user, the method further includes: controlling a second display apparatus to display a second display interface, where the second display interface includes a first display area and a second display area, the first display area includes information about a plurality of seat areas, and the second display area includes information about the plurality of head areas; and the plurality of head areas include the first head area, the plurality of seat areas include a first seat area, and the first input indicates the first seat area and the first head area; where the instruction indicates the first seat area and the first head area.

With reference to the second aspect, in some implementations of the second aspect, before the obtaining the first input of the user, the method further includes: controlling a third display apparatus to display a third display interface, where the third display interface includes the information about the plurality of seat areas; obtaining a second touch input of the user on the third display interface, where the second touch input indicates a second seat area, and the plurality of seat areas include the second seat area; and controlling, based on the second touch input, the third display apparatus to display a fourth display interface, where the fourth display interface includes the information about the plurality of head areas in the second seat area, and the plurality of head areas include the first head area; where the obtaining the first input of the user includes: obtaining a third touch input of the user on the fourth display interface or obtaining a third voice input of the user, where the third touch input or the third voice input indicates the first head area.

With reference to the second aspect, in some implementations of the second aspect, the obtaining the first input of the user includes: obtaining the first input of the user on an electronic device.

With reference to the second aspect, in some implementations of the second aspect, the method further includes: controlling the prompt apparatus to prompt the user with the head position of the user and the plurality of head areas, where the head position of the user is determined by second data collected by the sensor in the cockpit.

According to a third aspect, this application provides a noise cancellation method. The method includes: receiving an instruction, where the instruction indicates a first head area; determining, based on the instruction, a first noise cancellation parameter associated with the first head area; and performing noise cancellation based on the first noise cancellation parameter.

The foregoing method in the third aspect may be applied to a digital signal processor.

In some possible implementations, the receiving the instruction includes: receiving the instruction sent by a cockpit domain controller.

With reference to the third aspect, in some implementations of the third aspect, the instruction indicates a first seat area and the first head area; where determining, based on the instruction, the first noise cancellation parameter associated with the first head area includes: determining, based on the instruction, the first noise cancellation parameter associated with the first head area in the first seat area.

With reference to the third aspect, in some implementations of the third aspect, determining, based on the instruction, the first noise cancellation parameter associated with the first head area includes: determining, based on the instruction and a first mapping relationship, the first noise cancellation parameter, where the first mapping relationship includes a mapping relationship between a head area and a noise cancellation parameter.

According to a fourth aspect, this application provides a noise cancellation method. The method includes: when it is detected that a head position of a user moves from a first head area to a second head area, adjusting a noise cancellation parameter and controlling a prompt apparatus to prompt the user that the noise cancellation parameter has been adjusted.

With reference to the fourth aspect, in some implementations of the fourth aspect, the noise cancellation parameter corresponding to the first head area is a first noise cancellation parameter, and the noise cancellation parameter corresponding to the second head area is a second noise cancellation parameter, and the adjusting the noise cancellation parameter includes: adjusting the noise cancellation parameter from the first noise cancellation parameter to the second noise cancellation parameter.

With reference to the fourth aspect, in some implementations of the fourth aspect, controlling the prompt apparatus to prompt the user that the noise cancellation parameter has been adjusted includes: controlling a display apparatus to display prompt information, where the prompt information is used to inform the user that the noise cancellation parameter has been adjusted, or the prompt information is used to inform the user that the noise cancellation parameter has been adjusted to a noise cancellation parameter corresponding to a current head area of the user.

According to a fifth aspect, this application provides a noise cancellation apparatus. The apparatus includes: an obtaining unit, configured to obtain a first input of a user, where the first input indicates a first head area in a cockpit; a determining unit, configured to determine, based on the first input, a first noise cancellation parameter associated with the first head area; and a noise cancellation unit, configured to perform noise cancellation based on the first noise cancellation parameter.

With reference to the fourth aspect, in some implementations of the fourth aspect, the apparatus further includes: a first detection unit, configured to detect, before the obtaining unit obtains the first input, that the user starts an application program of a preset type; and a first control unit, configured to control a prompt apparatus to prompt the user to select from a plurality of head areas, where the plurality of head areas include the first head area.

With reference to the fifth aspect, in some implementations of the fifth aspect, the apparatus further includes: a second detection unit, configured to detect, before the obtaining unit obtains the first input, that a speed of the vehicle is greater than or equal to a first threshold, and/or that an intensity of a vibration signal detected by an accelerometer is greater than or equal to a second threshold; and a second control unit, configured to control the prompt apparatus to prompt the user to select from a plurality of head areas, where the plurality of head areas include the first head area.

With reference to the fifth aspect, in some implementations of the fifth aspect, the apparatus further includes a third control unit; the noise cancellation unit is further configured to: before the obtaining unit obtains the first input, perform noise cancellation based on a second noise cancellation parameter, where the second noise cancellation parameter is associated with a second head area; the obtaining unit is further configured to obtain first data collected by a sensor in the cockpit; and the third control unit is configured to control, when the determining unit determines, based on the first data, that a head position of the user is in the first head area, the prompt apparatus to prompt the user to select from a plurality of head areas, where the plurality of head areas include the first head area.

With reference to the fifth aspect, in some implementations of the fifth aspect, the apparatus further includes: a storage unit, configured to store an association relationship between identification information of the user and the first head area.

With reference to the fifth aspect, in some implementations of the fifth aspect, the apparatus further includes a fourth control unit; the obtaining unit is configured to obtain, before the obtaining unit obtains the first input, a first speech instruction of the user, where the first speech instruction instructs to adjust a noise cancellation area; the fourth control unit is configured to control, based on the first speech instruction, a first display apparatus to display a first display interface, where the first display apparatus is a display apparatus in a seat area where the user is located, the first display interface includes a plurality of head areas, and the plurality of head areas include the first head area; and the obtaining unit is specifically configured to obtain a first touch input of the user on the first display interface or obtain a second speech instruction of the user, where the first touch input or the second speech instruction indicates the first head area.

With reference to the fifth aspect, in some implementations of the fifth aspect, the apparatus further includes a fifth control unit; the fifth control unit is configured to control, before the obtaining unit obtains the first input, a second display apparatus to display a second display interface, where the second display interface includes a first display area and a second display area, the first display area includes information about a plurality of seat areas, and the second display area includes information about the plurality of head areas; the plurality of head areas include the first head area, the plurality of seat areas include a first seat area, and the first input indicates the first seat area and the first head area; and the determining unit is specifically configured to determine, based on the first input, the first noise cancellation parameter associated with the first head area in the first seat area.

With reference to the fifth aspect, in some implementations of the fifth aspect, the apparatus further includes a sixth control unit; the sixth control unit is configured to control, before the obtaining unit obtains the first input, a third display apparatus to display a third display interface, where the third display interface includes the information about the plurality of seat areas; the obtaining unit is further configured to obtain a second touch input of the user on the third display interface, where the second touch input indicates a second seat area, and the plurality of seat areas include the second seat area; the sixth control unit is further configured to control, based on the second touch input, the third display apparatus to display a fourth display interface, where the fourth display interface includes the information about the plurality of head areas in the second seat area, and the plurality of head areas include the first head area; and the obtaining unit is specifically configured to obtain a third touch input of the user on the fourth display interface or obtain a third voice input of the user, where the third touch input or the third voice input indicates the first head area.

With reference to the fifth aspect, in some implementations of the fifth aspect, the obtaining unit is specifically configured to obtain the first input of the user on an electronic device.

With reference to the fifth aspect, in some implementations of the fifth aspect, the determining unit is specifically configured to determine, based on the first input and a first mapping relationship, the first noise cancellation parameter, where the first mapping relationship includes a mapping relationship between a head area and a noise cancellation parameter.

With reference to the fifth aspect, in some implementations of the fifth aspect, the apparatus further includes a seventh control unit; and the seventh control unit is configured to control the prompt apparatus to prompt the user with the head position of the user and the plurality of head areas, and the head position of the user is determined by second data collected by the sensor in the cockpit.

According to a sixth aspect, this application provides a noise cancellation apparatus. The noise cancellation apparatus includes: an obtaining unit, configured to obtain a first input of a user, where the first input indicates a first head area in a cockpit; and a sending unit, configured to send an instruction, where the instruction indicates the first head area.

After receiving the instruction, the foregoing digital signal processor may determine, based on the instruction, a first noise cancellation parameter associated with the first head area, and perform noise cancellation based on the first noise cancellation parameter.

With reference to the sixth aspect, in some implementations of the sixth aspect, the apparatus further includes: a first detection unit, configured to detect, before the obtaining unit obtains the first input, that the user starts an application program of a preset type; and a first control unit, configured to control a prompt apparatus to prompt the user to select from a plurality of head areas, where the plurality of head areas include the first head area.

With reference to the sixth aspect, in some implementations of the sixth aspect, the apparatus further includes: a second detection unit, configured to detect, before the obtaining unit obtains the first input, that a speed of the vehicle is greater than or equal to a first threshold, and/or that an intensity of a vibration signal detected by an accelerometer is greater than or equal to a second threshold; and a second control unit, configured to control the prompt apparatus to prompt the user to select from a plurality of head areas, where the plurality of head areas include the first head area.

With reference to the sixth aspect, in some implementations of the sixth aspect, the apparatus further includes a receiving unit and a third control unit; the receiving unit is configured to receive information about a second head area sent by a digital signal processor; the obtaining unit is further configured to obtain first data collected by a sensor in the cockpit; and the third control unit is configured to control, when the determining unit determines, based on the first data, that a head position of the user is in the first head area, the prompt apparatus to prompt the user to select from a plurality of head areas, where the plurality of head areas include the first head area.

With reference to the sixth aspect, in some implementations of the sixth aspect, the apparatus further includes: a storage unit, configured to store an association relationship between identification information of the user and the first head area.

With reference to the sixth aspect, in some implementations of the sixth aspect, the apparatus further includes a fourth control unit; the obtaining unit is configured to obtain, before the obtaining unit obtains the first input, a first speech instruction of the user, where the first speech instruction instructs to adjust a noise cancellation area; the fourth control unit is configured to control, based on the first speech instruction, a first display apparatus to display a first display interface, where the first display apparatus is a display apparatus in a seat area where the user is located, the first display interface includes a plurality of head areas, and the plurality of head areas include the first head area; and the obtaining unit is specifically configured to obtain a first touch input of the user on the first display interface or obtain a second speech instruction of the user, where the first touch input or the second speech instruction indicates the first head area.

With reference to the sixth aspect, in some implementations of the sixth aspect, the apparatus further includes a fifth control unit; the fifth control unit is configured to control, before the obtaining unit obtains the first input, a second display apparatus to display a second display interface, where the second display interface includes a first display area and a second display area, the first display area includes information about a plurality of seat areas, and the second display area includes information about the plurality of head areas; and the plurality of head areas include the first head area, the plurality of seat areas include a first seat area, and the first input indicates the first seat area and the first head area; where the instruction indicates the first seat area and the first head area.

With reference to the sixth aspect, in some implementations of the sixth aspect, the apparatus further includes a sixth control unit; the sixth control unit is configured to control, before the obtaining unit obtains the first input, a third display apparatus to display a third display interface, where the third display interface includes the information about the plurality of seat areas; the obtaining unit is further configured to obtain a second touch input of the user on the third display interface, where the second touch input indicates a second seat area, and the plurality of seat areas include the second seat area; the sixth control unit is further configured to control, based on the second touch input, the third display apparatus to display a fourth display interface, where the fourth display interface includes the information about the plurality of head areas in the second seat area, and the plurality of head areas include the first head area; and the obtaining unit is specifically configured to obtain a third touch input of the user on the fourth display interface or obtain a third voice input of the user, where the third touch input or the third voice input indicates the first head area.

With reference to the sixth aspect, in some implementations of the sixth aspect, the obtaining unit is specifically configured to obtain the first input of the user on an electronic device.

With reference to the sixth aspect, in some implementations of the sixth aspect, the apparatus further includes a seventh control unit; and the seventh control unit is configured to control the prompt apparatus to prompt the user with the head position of the user and the plurality of head areas, and the head position of the user is determined by second data collected by the sensor in the cockpit.

According to a seventh aspect, this application provides a noise cancellation apparatus. The noise cancellation apparatus includes: a receiving unit, configured to receive an instruction, where the instruction indicates a first head area; a determining unit, configured to determine, based on the instruction, a first noise cancellation parameter associated with the first head area; and a noise cancellation unit, configured to perform noise cancellation based on the first noise cancellation parameter.

With reference to the seventh aspect, in some implementations of the seventh aspect, the instruction indicates a first seat area and the first head area; where the determining unit is specifically configured to determine, based on the instruction, the first noise cancellation parameter associated with the first head area in the first seat area.

With reference to the seventh aspect, in some implementations of the seventh aspect, the determining unit is specifically configured to determine, based on the instruction and a first mapping relationship, the first noise cancellation parameter, where the first mapping relationship includes a mapping relationship between a head area and a noise cancellation parameter.

According to an eighth aspect, this application provides a noise cancellation apparatus. The apparatus includes: a detection unit, configured to detect that a head position of a user moves from a first head area to a second head area; a noise cancellation parameter adjustment unit, configured to adjust a noise cancellation parameter; and a control unit, configured to control a prompt apparatus to prompt the user that the noise cancellation parameter has been adjusted.

The foregoing steps performed by the noise cancellation parameter adjustment unit and the control unit are not in an actual sequence.

With reference to the eighth aspect, in some implementations of the eighth aspect, the noise cancellation parameter corresponding to the first head area is a first noise cancellation parameter, the noise cancellation parameter corresponding to the second head area is a second noise cancellation parameter, and the noise cancellation parameter adjustment unit is specifically configured to adjust the noise cancellation parameter from the first noise cancellation parameter to the second noise cancellation parameter.

With reference to the eighth aspect, in some implementations of the eighth aspect, the control unit is specifically configured to control a display apparatus to display prompt information, where the prompt information is used to prompt the user that the noise cancellation parameter has been adjusted, or the prompt information is used to prompt the user that the noise cancellation parameter has been adjusted to the noise cancellation parameter corresponding to a current head area of the user.

According to a ninth aspect, this application provides a noise cancellation apparatus. The apparatus includes a processor and a memory. The memory is configured to store instructions, and the processor executes the instructions stored in the memory, so that the apparatus performs any possible method according to any one of the first aspect to the fourth aspect.

According to a tenth aspect, this application provides a noise cancellation system. The system includes a prompt apparatus and a computing platform, and the computing platform includes any possible apparatus according to any one of the fifth aspect to the ninth aspect.

According to an eleventh aspect, this application provides a noise cancellation system. The system includes a cockpit domain controller and a digital signal processor. The cockpit domain controller includes the apparatus according to the fifth aspect, and the digital signal processor includes the apparatus according to the sixth aspect.

According to a twelfth aspect, this application provides a vehicle. The vehicle includes any possible apparatus according to any one of the fifth aspect to the ninth aspect, or includes the system according to the tenth aspect, or includes the system according to the eleventh aspect.

According to a thirteenth aspect, this application provides a computer program product. The computer program product includes computer program code, and when the computer program code is run on a computer, the computer is enabled to perform any possible method according to any one of the first aspect to the fourth aspect.

It should be noted that all or a part of the computer program code may be stored in a first storage medium. The first storage medium may be packaged together with a processor, or may be packaged separately from a processor. This is not specifically limited in embodiments of this application.

According to a fourteenth aspect, this application provides a computer-readable medium. The computer-readable storage medium stores program code, and when the computer program code is run on a computer, the computer is enabled to perform any possible method according to any one of the first aspect to the fourth aspect.

According to a fifteenth aspect, this application provides a chip system. The chip system includes a processor. The processor is configured to invoke a computer program or computer instructions stored in a memory, so that the processor performs any possible method according to any one of the first aspect to the fourth aspect.

With reference to the fifteenth aspect, in a possible implementation, the processor is coupled to the memory through an interface.

With reference to the fifteenth aspect, in a possible implementation, the chip system further includes the memory, and the memory stores the computer program or the computer instructions.

According to a sixteenth aspect, this application provides a chip. The chip includes a circuit, and the circuit is configured to perform any possible method according to the first aspect to the fourth aspect.

### BRIEF DESCRIPTION OF DRAWINGS

FIG. 1 is a functional block diagram of a vehicle according to an embodiment of this application;
FIG. 2A and FIG. 2B show human machine interfaces HMIs according to an embodiment of this application;
FIG. 3A and FIG. 3B show other HMIs according to an embodiment of this application;
FIG. 4A and FIG. 4B show other HMIs according to an embodiment of this application;
FIG. 5 shows another HMI according to an embodiment of this application;
FIG. 6 shows another HMI according to an embodiment of this application;
FIG. 7A and FIG. 7B show other HMIs according to an embodiment of this application;
FIG. 8 shows another HMI according to an embodiment of this application;
FIG. 9 is a diagram of a vehicle cockpit scenario according to an embodiment of this application;
FIG. 10 shows a process of implementing active noise cancellation based on a determined noise cancellation parameter according to an embodiment of this application;
FIG. 11 shows another process of implementing active noise cancellation based on a determined noise cancellation parameter according to an embodiment of this application;
FIG. 12 is a schematic flowchart of a noise cancellation method according to an embodiment of this application; and
FIG. 13 is a block diagram of a noise cancellation apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and indicates that three relationships may exist. For example, at least one of A and B may indicate the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. Use of prefix words such as ordinal numbers used to distinguish the described objects in embodiments of this application does not constitute a limitation on the described objects. For descriptions of the described objects, refer to the context description in claims or embodiments, and the use of such prefix words should not constitute a redundant limitation. In addition, in the descriptions of embodiments, unless otherwise specified, "a plurality of" means two or more.

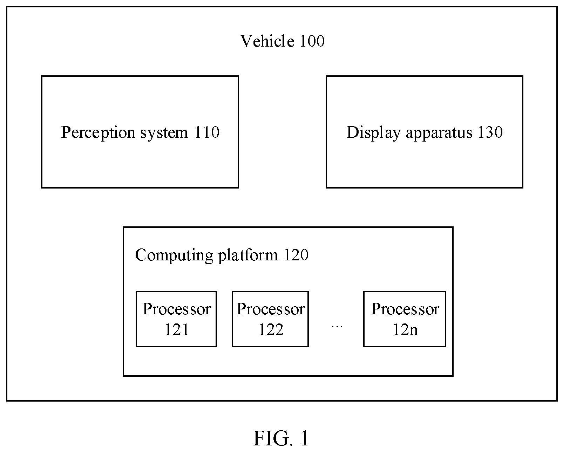

FIG. 1 is a functional block diagram of a vehicle 100 according to an embodiment of this application. The vehicle 100 may include a perception system 110, a computing platform 120, and a display apparatus 130. The perception system 110 may include one or more sensors that perceive information about an ambient environment of the vehicle 100. For example, the perception system 110 may include a positioning system. The positioning system may be a global positioning system (global positioning system, GPS), a BeiDou system, or another positioning system. For another example, the perception system 110 may include one or more of an inertial measurement unit (inertial measurement unit, IMU), an acceleration sensor, a lidar, a millimeter-wave radar, an ultrasonic radar, and an image shooting apparatus. For example, the acceleration sensor may include a sensor for detecting an acceleration signal of an air suspension system, or may include a sensor for an acceleration signal of ESC.

A part or all of functions of the vehicle 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may achieve a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement configuration of the hardware circuit may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and a part or all of the processors 121 to 12n may invoke the instructions in the memory, to implement a corresponding function.

The display apparatus 130 in a cockpit is mainly classified into two types: a first type is an in-vehicle display, and a second type is a projection display, for example, a head-up display (head-up display, HUD) apparatus. The in-vehicle display is a physical display, and is an important part of an in-vehicle infotainment system. A plurality of displays may be disposed in the cockpit, for example, a digital dashboard display, a central display screen, a display in front of a passenger in a front passenger seat (also referred to as a front-row passenger), a display in front of a rear-seat passenger on the left, and a display in front of a rear-seat passenger on the right. Even a window may be used as a display for display. Head-up display, also referred to as a head-up display system, is mainly configured to display driving information such as a speed and navigation on a display apparatus (for example, a windshield) in front of a driver, to reduce line-of-sight transfer time of the driver, avoid a pupil change caused by a line-of-sight transfer of the driver, and improve driving safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. It should be understood that there may be another type of HUD systems with evolution of technologies. This is not limited in this application.

The foregoing display apparatus 130 is described by using the in-vehicle display and the projection display as an example. Embodiments of this application are not limited thereto. For example, the display apparatus 130 may alternatively be a light display or a projection screen.

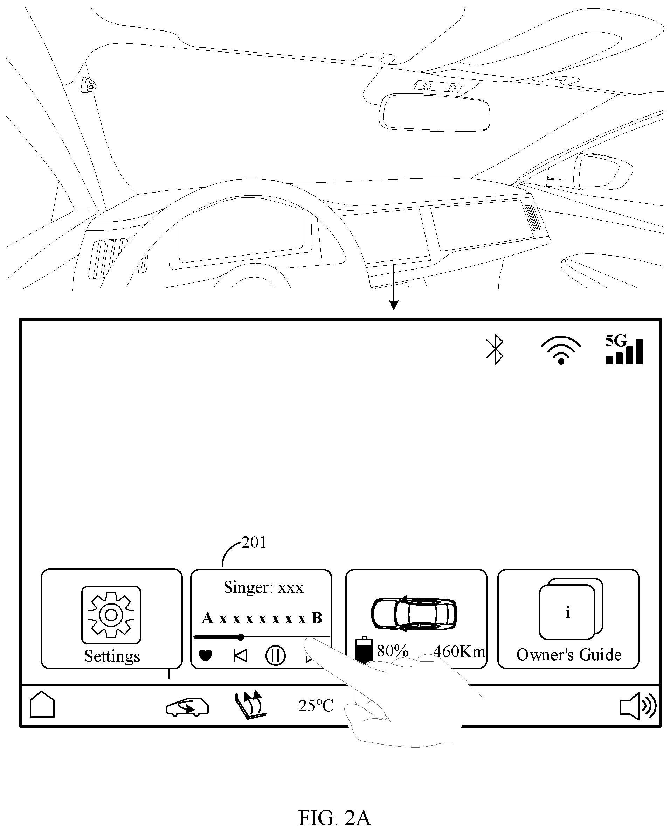

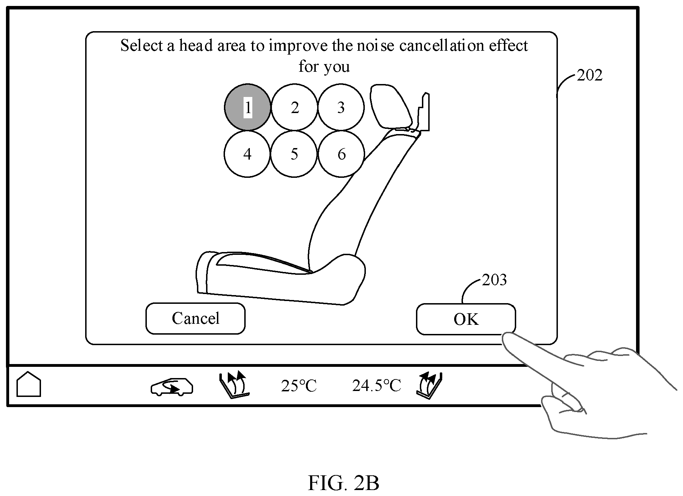

FIG. 2A and FIG. 2B show human machine interfaces (human machine interfaces, HMIs) according to an embodiment of this application.

As shown in FIG. 2A, a vehicle may display, by using a display, a widget corresponding to a settings application, a widget 201 corresponding to an in-vehicle music application, a widget corresponding to remaining power and remaining driving mileage of the vehicle, and a widget corresponding to an Owner's Guide.

Widgets may be associated with some applications installed on the vehicle. For example, the widget 201 may be associated with the in-vehicle music application. The widget 201 may display at least one of a singer name corresponding to a piece of music, lyrics information, a playback progress bar, a favorites control, a control for switching to playing a previous piece of music, a pause/play control, and a control for switching to playing a next piece of music. When an operation of tapping the widget 201 by the user is detected, the vehicle may display, on the display, the HMI shown in FIG. 2B.

As shown in FIG. 2B, when the operation of tapping the widget 201 by the user is detected, the vehicle may display a display interface of the in-vehicle music application and a prompt box 202. The prompt box 202 includes prompt information "Select a head area to improve the noise cancellation effect for you" and information about a head area 1 to a head area 6. When operations of selecting the head area 1 and tapping an OK control 203 by the user are detected, the vehicle may perform noise cancellation based on a noise cancellation parameter corresponding to the head area 1.

The head area 1 shown in FIG. 2B may be configured such that, after the head area 1 is selected by the user, the filling color of the head area 1 changes to gray. In this case, the user is required to first tap the head area 1 and then tap the OK control 203. Alternatively, the head area may be directly recommended by the vehicle based on an actual head position of the user (the filling color of the head area 1 is already gray when the prompt box 202 is displayed). In this case, if the user confirms the head area recommended by the vehicle, the user only needs to tap the OK control 203.

The foregoing FIG. 2B is described by using an example in which six head areas are displayed. Embodiments of this application do not specifically limit a quantity of head areas displayed on the HMI. For example, there may be two to nine head areas displayed in the prompt box 202.

The foregoing description takes an example in which the head area 1 to the head area 6 do not overlap with each other. Embodiments of this application are not limited thereto. The head areas may also overlap one another. For example, there may be an overlapping area between the head area 1 and the head area 2. When a human ear is located in the overlapping area, the user may be prompted that noise cancellation is first performed by using a noise cancellation parameter 1 corresponding to the head area 1, and then noise cancellation is performed by using a noise cancellation parameter 2 corresponding to the head area 2, thereby helping select, from the head area 1 and the head area 2, a head area that the user considers to have a better noise cancellation effect. Alternatively, the vehicle may recommend an appropriate head area to the user from the head area 1 and the head area 2.

In an embodiment, the user may alternatively define the quantity of head areas. For example, when the vehicle has a boss seat, nine head areas may be defined for the boss seat, and two head areas may be defined for a non-boss seat.

Based on the foregoing technical solution, when the user chooses to start the in-vehicle music application, the display may be triggered to display a plurality of head areas, thereby helping the user select from the plurality of head areas. This makes it convenient to automatically trigger a prompt when the user uses the in-vehicle music application to listen to music, thereby improving user experience when using the in-vehicle music application.

The foregoing FIG. 2A and FIG. 2B are described by using an example in which the display is triggered to display the plurality of head areas when the in-vehicle music application is started. Embodiments of this application are not limited thereto. For example, when it is detected that the user starts a video application or enables a nap mode, the display may be triggered to display the plurality of head areas; or when an alert tone is played, the display may be triggered to display the plurality of head areas, or the user may select a head area in the settings application program; or when it is detected that seat adjustment (for example, fore-aft adjustment of a seat basin, angle adjustment of a seat back, or the like) is completed, the display may be triggered to display the plurality of head areas.

The foregoing triggering manners may also be combined with each other. For example, when it is detected that the user starts the in-vehicle music application and the seat adjustment is completed, the display may be triggered to display the plurality of head areas.

The foregoing FIG. 2A and FIG. 2B are described by using an example in which the user taps the head area 1. Embodiments of this application are not limited thereto. The user may also select the head area in other input manners. For example, the user may send a speech instruction "Select head area 1". When the speech instruction sent by the user is detected, the vehicle may perform noise cancellation based on the noise cancellation parameter corresponding to the head area 1. For another example, the user may make an air gesture 1, and the air gesture 1 may be a gesture of holding up one finger. The vehicle may determine, based on the air gesture 1, that the user selects the head area 1, thereby performing noise cancellation based on the noise cancellation parameter corresponding to the head area 1.

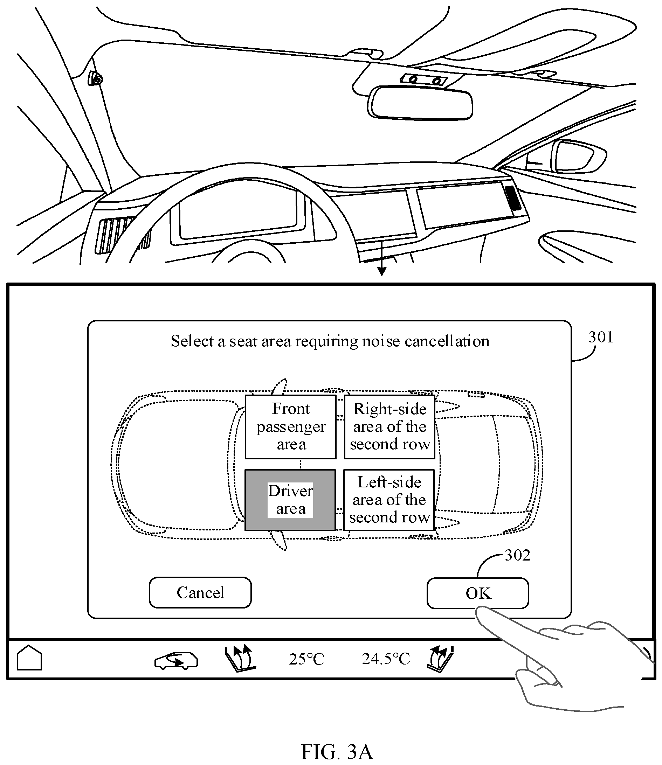

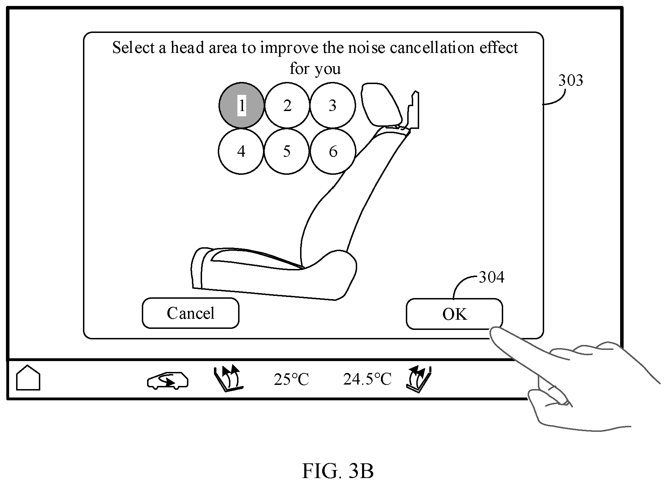

FIG. 3A and FIG. 3B show other HMIs according to an embodiment of this application.

As shown in FIG. 3A, the HMI is a selection interface for a plurality of seat areas. Before the user selects from the plurality of head areas, a seat area that requires noise cancellation may be displayed. For example, when the operation of tapping the widget 201 by the user is detected, the vehicle may display, on the display, the HMI shown in FIG. 3A. The HMI includes a prompt box 301. The prompt box 301 includes prompt information "Select a seat area requiring noise cancellation". When operations of selecting a driver area and tapping an OK control 302 by the user are detected, the vehicle may display, on the display, the HMI shown in FIG. 3B.

As shown in FIG. 3B, when the operations of selecting the driver area and tapping the OK control 302 by the user are detected, the vehicle may display a prompt box 303. The prompt box 303 includes the prompt information "Select a head area to improve the noise cancellation effect for you" and information about the head area 1 to the head area 6. When operations of selecting the head area 1 and tapping an OK control 304 by the user are detected, the vehicle may perform noise cancellation based on the noise cancellation parameter corresponding to the head area 1.

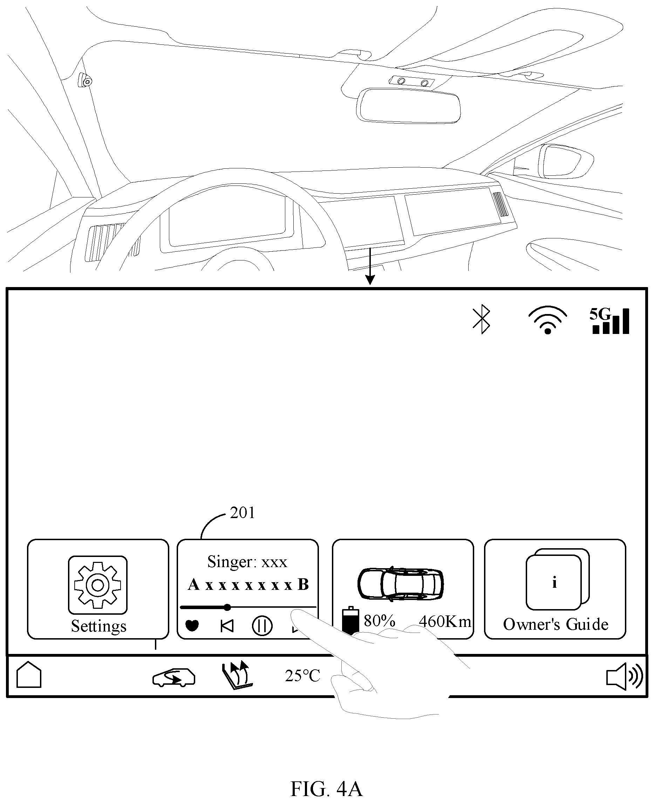

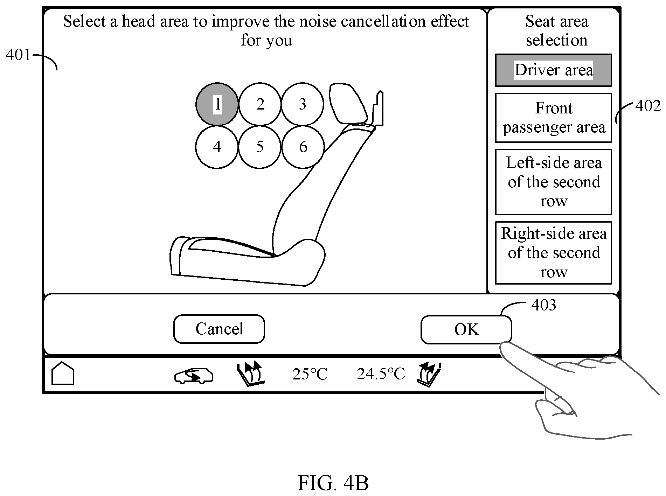

FIG. 4A and FIG. 4B show other HMIs according to an embodiment of this application.

As shown in FIG. 4A, the vehicle may display, on the display, the widget corresponding to the settings application program, the widget 201 corresponding to the in-vehicle music application, the widget corresponding to remaining power and remaining driving mileage of the vehicle, and the widget corresponding to the Owner's Guide.

As shown in FIG. 4B, when the operation of tapping the widget 201 by the user is detected, the vehicle may display a display interface of the seat area and the head area. The display interface includes an area 401 and an area 402, the area 401 is a selection area for the head area, and the area 402 is a selection area for the seat area. When it is detected that the user selects the head area 1 in the area 401 and selects the driver area in an area 2, the vehicle may perform noise cancellation based on the noise cancellation parameter corresponding to the head area 1 in the driver area.

In an embodiment of this application, information about the seat area and information about the head area may be displayed on a same display interface, so that the user can select the seat area and the head area on the same display interface.

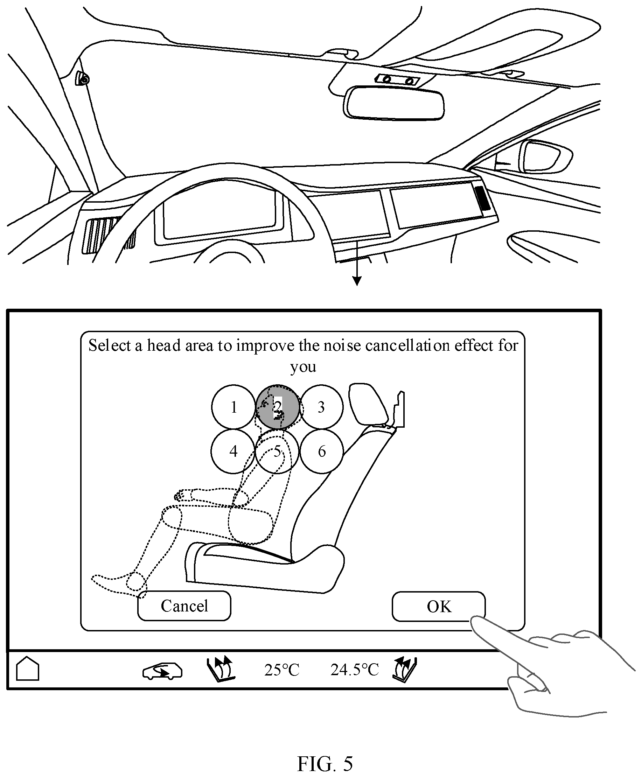

FIG. 5 shows another HMI according to an embodiment of this application. The HMI may be a selection interface for the head area. The HMI may also include posture information of the user. For example, the vehicle may determine the posture information of the user based on data collected by a sensor (for example, a camera or a radar) in the cockpit. The posture information may be displayed by using the HMI. In this way, when selecting a head area, the user may more accurately select a head area where the current head position (or a human ear position) of the user is located.

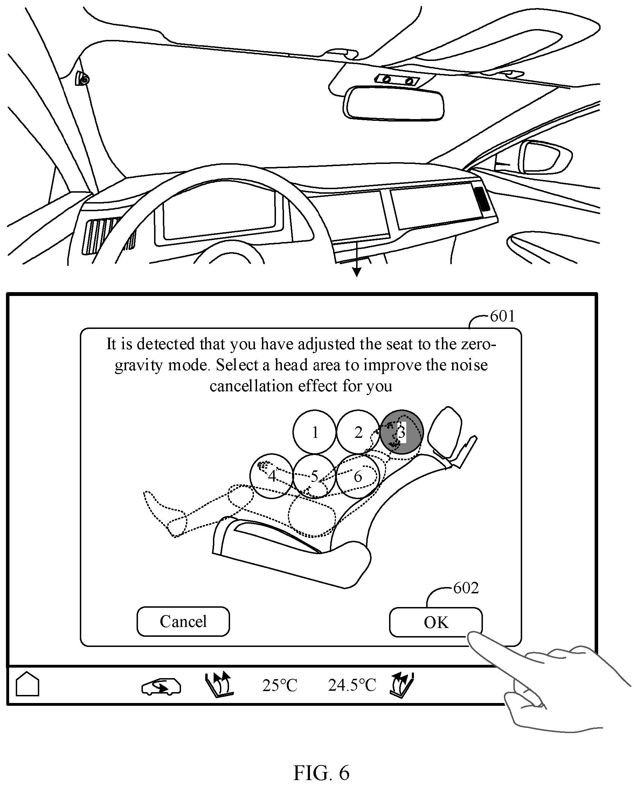

FIG. 6 shows another HMI according to an embodiment of this application. When it is detected that the user enables a zero-gravity seat mode, the display may be triggered to display a prompt box 601. The prompt box 601 includes prompt information "It is detected that you have adjusted the seat to the zero-gravity mode. Select a head area to improve the noise cancellation effect for you" and the information about the head areas 1-6. When operations of selecting a head area 3 and tapping an OK control 602 by the user are detected, the vehicle may perform noise cancellation based on a noise cancellation parameter corresponding to the head area 3.

In an embodiment, the display may be a central control screen. For example, a zero-gravity seat is located in a second-row area. When it is detected that the user in the second-row area enables the zero-gravity seat mode, the central control screen may be triggered to display the prompt box 601. In this way, the user in the driver area or a front passenger area may select a corresponding head area for the user in the second-row area, thereby improving listening experience of the user in the second-row area in the zero-gravity seat mode.

In an embodiment, the display may be a display in the area where the zero-gravity seat is located. For example, the zero-gravity seat is located on the right side of the second row, and the display may be a display in the right-side area of the second row. This is convenient for the user located in the right-side area of the second row to select a head area.

In embodiments of this application, when it is detected that the user enables the zero-gravity seat mode, the display may be triggered to display the plurality of head areas. The user may select the head area where the head position of the user is located, so that the vehicle may perform the noise cancellation based on the noise cancellation parameter corresponding to the head area, thereby helping improve listening experience of the user in the zero-gravity seat mode.

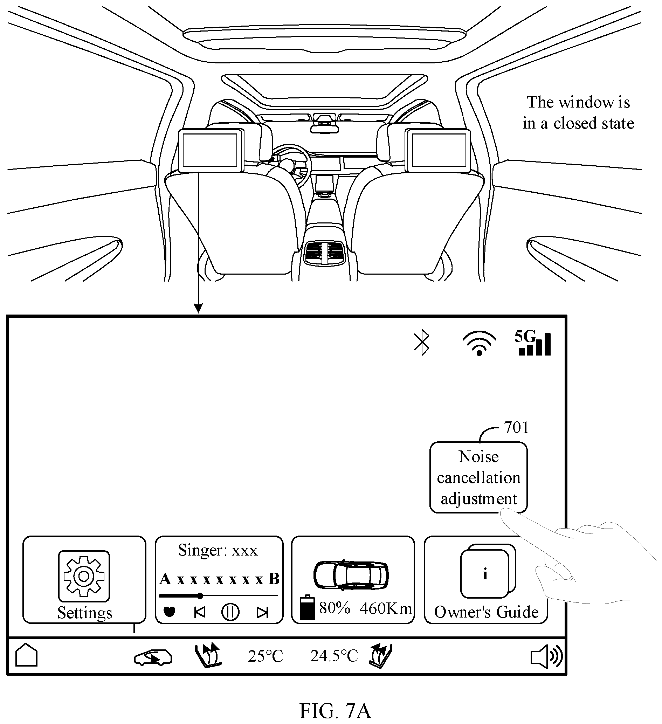

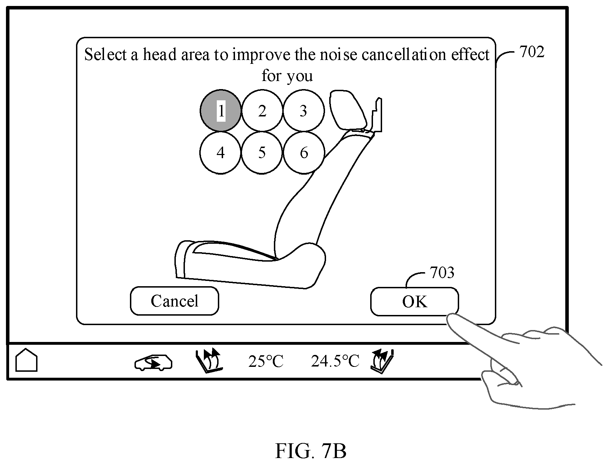

FIG. 7A and FIG. 7B show other HMIs according to an embodiment of this application.

As shown in FIG. 7A, when it is detected that vehicle windows are in a closed state, a control 701 may be displayed through a desktop, and the control 701 may be associated with the selection interface for the head area.

As shown in FIG. 7B, when an operation of tapping the control 701 by the user is detected, a prompt box 702 may be displayed. The prompt box 702 includes the prompt information "Select a head area to improve the noise cancellation effect for you" and the information about the head area 1 to the head area 6. When operations of selecting the head area 1 and tapping an OK control 703 by the user are detected, the vehicle may perform noise cancellation based on the noise cancellation parameter corresponding to the head area 1.

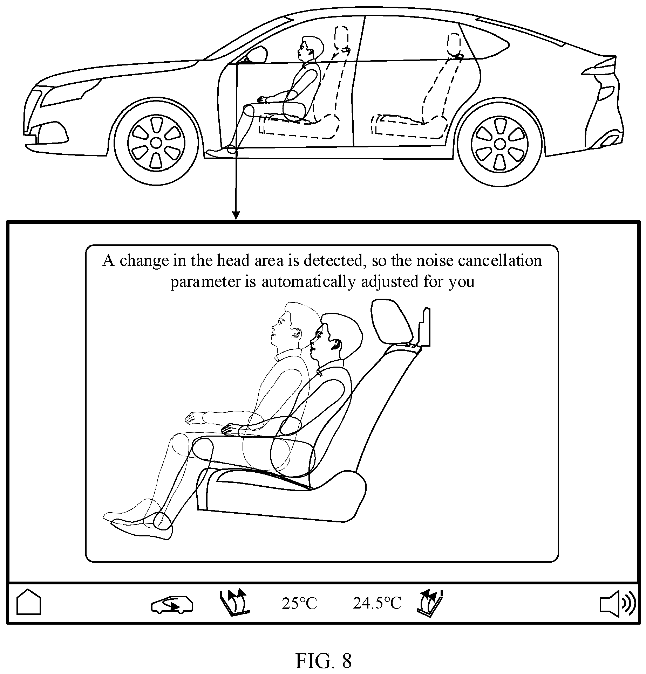

With reference to the HMIs shown in FIG. 2A to FIG. 7B, the foregoing describes the embodiment in which the user manually selects the head area. With reference to FIG. 8, the following describes another embodiment in which the noise cancellation parameter is automatically adjusted.

FIG. 8 shows another HMI according to an embodiment of this application. When it is detected that the head position of the user changes (for example, from the head area 2 to the head area 1, as shown in FIG. 2B), the vehicle may automatically adjust the noise cancellation parameter. For example, the noise cancellation parameter corresponding to the head area 1 is the noise cancellation parameter 1, and the noise cancellation parameter corresponding to the head area 2 is the noise cancellation parameter 2. When it is detected that the head position of the user is adjusted from the head area 2 to the head area 1, the noise cancellation parameter may be adjusted from the noise cancellation parameter 2 to the noise cancellation parameter 1, thereby ensuring that noise cancellation experience of the user is not affected. In addition, the vehicle may display, by using an HMI, prompt information "A change in head position has been detected, and the noise cancellation parameter has been automatically adjusted for you".

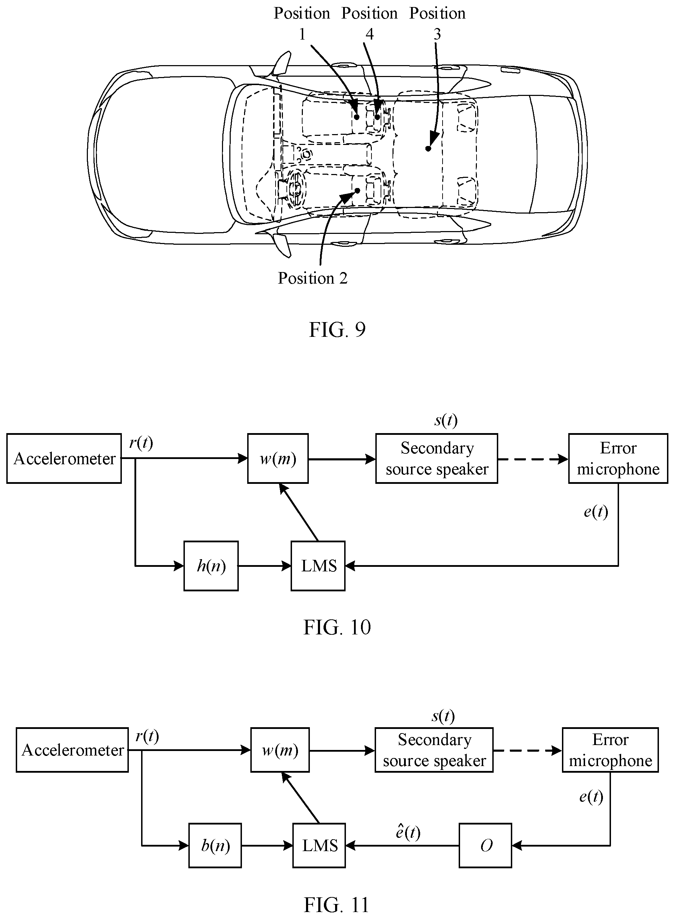

For example, FIG. 9 is a diagram of a vehicle cockpit scenario according to an embodiment of this application. As shown in FIG. 9, head positions 1 to 4 are located in the cockpit. The head position 1 and the head position 4 are located in the front passenger area in the cockpit, the head position 2 may be located in the driver area in the cockpit, and the head position 3 may be located in the second-row area of the cockpit. When the head position of the user is located in different areas of the cockpit, the noise perceived by the user varies. For example, when the vehicle is exposed to a same noise environment, noise propagation paths corresponding to different head positions are different because the head position 1, the head position 2, and the head position 3 are located in different areas of the cockpit, respectively. When a head (or a human ear part) of the user is located in the head position 1, the head position 2, or the head position 3, the noise perceived by the user varies.

Similarly, because propagation paths of sounds corresponding to different head positions are different, even if the vehicle is exposed to the same noise environment, audio signals collected by noise collection apparatuses disposed at the different head positions are different.

FIG. 9 is described by using a five-seat vehicle as an example. Embodiments of this application are not limited thereto. In some possible implementations, the cockpit may include more or fewer seats. For example, for a seven-seat sport/suburban utility vehicle (sport/suburban utility vehicle, SUV), the cockpit may include three rows of seats. For another example, a cockpit of a bus may include more seats.

In another embodiment, when the head position of the user is located in a same seat area in the cockpit but in different head areas within that seat area, the noise perceived by the user varies. For example, an example in which the user is in the front passenger area is used, by adjusting a body posture (or a sitting posture) of the user, the head position of the user may be located at the head position 1 or the head position 4. Because the propagation paths of sounds corresponding to the head position 1 and the head position 4 are different, when the head position of the user is located at the head position 1 or the head position 4, the noise perceived by the user varies.

In embodiments of this application, active noise cancellation may be divided into a calibration phase and a use phase. In the calibration phase, a plurality of seat postures may be first set, and for each seat posture, a noise cancellation parameter is determined for each of the plurality of head areas. In the use phase, an appropriate noise cancellation parameter may be determined based on the head area selected by the user and the noise cancellation parameter of each head area in the calibration phase, to implement active noise cancellation.

In an embodiment, based on a function of an error microphone in each phase of the active noise cancellation, the error microphone may be classified into a first error microphone and a second error microphone. In the calibration phase, audio signals collected by the first error microphone and the second error microphone may be used to calibrate the active noise cancellation function, or in other words, may be used to calibrate the noise cancellation parameter. In the use phase, the audio signal to be output by a secondary source speaker may be determined based on the audio signal collected by the first error microphone. In the use phase, the second error microphone may not be involved. For example, the first error microphone may include an error microphone disposed at a seat headrest, an upper side of the seat back, or the like. For another example, the second error microphone may include a microphone disposed at a human ear of the user in the calibration phase. Because the second error microphone may be used only in the calibration phase, and is not involved in the use phase, the second error microphone may be referred to as a virtual microphone (or may be referred to as a virtual error microphone); correspondingly, the first error microphone involved in both the calibration phase and the use phase may be referred to as a real microphone (or may be referred to as a real error microphone).

In some possible implementations, the noise cancellation parameter may be calibrated based on a least mean square (least mean square, LMS) method.

In an embodiment, it is assumed that *I* error microphones are involved in the calibration scenario. The audio signal played by a secondary source speaker at moment *t* is denoted as *x*(*t*)*,* the signal collected by the *i*^{th} error microphone is denoted as *yᵢ*(*t*)*,* and the secondary path coefficient to be estimated is denoted as *hᵢ*(*n*)*. hᵢ*(*n*) can satisfy the following formulas: ${e}_{i} \left(t\right) = {y}_{i} \left(t\right) - {\sum }_{n = 1}^{N} x \left(t-n+1\right) {h}_{i} \left(n\right)$ ${h}_{i} \left(n\right) = {h}_{i} \left(n\right) + {μ}_{1} x \left(t-n+1\right) {e}_{i} \left(t\right) , n = 1 , … , N$ where *N* is the length of the secondary path coefficient, *eᵢ*(*t*) is a residual signal obtained by calculation based on a signal *yᵢ*(*t*) collected by the error microphone, and *µ*₁ is the update step.

In another embodiment, it is assumed that the calibration scenario may further include *K* virtual microphones. A signal collected by the *k*^{th} virtual microphone at the moment t is *aₖ*(*t*)*,* and the path coefficient of the propagation path from the secondary source speaker to the virtual microphone is denoted as *bₖ*(*g*)*.* Similar to *hₖ*(*n*)*, bₖ*(*g*) can satisfy the following formulas: ${d}_{k} \left(t\right) = {a}_{k} \left(t\right) - {\sum }_{g = 1}^{G} x \left(t-g+1\right) {b}_{k} \left(g\right)$ ${b}_{k} \left(g\right) = {b}_{k} \left(g\right) + {μ}_{2} x \left(t-g+1\right) {d}_{k} \left(t\right) , g = 1 , … , G$ where G is the length of the path coefficient, *dₖ*(*t*) is the residual signal obtained by calculation based on a signal *aₖ*(*t*) collected by the virtual microphone, and *µ*₂ is the update step.

In another embodiment, when a plurality of secondary source speakers are involved, a sound transfer path between each secondary source speaker and a corresponding error microphone may be calibrated separately based on the foregoing manner.

In another embodiment, it is assumed that in the calibration phase, *I* real microphones and K virtual microphones are disposed in the cockpit scenario. It is assumed that Y represents signals collected by all error microphones in the calibration scenario (that is, the signals collected by the *I* real microphones), *D* represents signals collected by all real microphones in the calibration scenario (that is, the signals collected by the K virtual microphones), and *O* represents an estimation result of an observation path. In this case, *O* can satisfy the following formula: $O = {R}_{YD} {\left({R}_{YY}+βI\right)}^{- 1}$

Here, *O* may represent an observation filter matrix, and can satisfy the following formula: $O = \left[\begin{matrix}o {′}_{11} \left({N}_{o}\right) & ⋯ & o {′}_{I 1} \left({N}_{o}\right) \\ ⋮ & ⋱ & ⋮ \\ o {′}_{1 K} \left({N}_{o}\right) & ⋯ & o {′}_{IK} \left({N}_{o}\right)\end{matrix}\right]$. An observation filter coefficient between the *i*^{th} real microphone and the *k*^{th} virtual microphone can be expressed as *o'ᵢₖ*(*Nₒ*). *o'ᵢₖ*(*Nₒ*) can satisfy the following formula: *o'ᵢₖ*(*Nₒ*) *=* [*oᵢₖ*(1) ··· *oᵢₖ*(*n*) ··· *oᵢₖ*(*Nₒ*)]*. Nₒ* can be a preset value, and can represent the length of the observation filter coefficient. Correspondingly, *o'ᵢₖ*(*Nₒ*) can represent a 1 × *N*ₒ-order vector, and *O* can represent an *I* × *Nₒ* × *K*-order matrix.

*R_{YD}* represents a cross-correlation matrix of *Y* and *D,* and *R_{YY}* represents an autocorrelation matrix of *Y. R_{YD}* and *R_{YY}* can satisfy the following formulas: ${R}_{YD} = \left[\begin{matrix}{r}_{YD} \left(1, 1, {N}_{o}\right) & ⋯ & {r}_{YD} \left(1, I, {N}_{o}\right) \\ ⋮ & ⋱ & ⋮ \\ {r}_{YD} \left(K, 1, {N}_{o}\right) & ⋯ & {r}_{YD} \left(K, I, {N}_{o}\right)\end{matrix}\right] ,$ and ${R}_{YY} = \left[\begin{matrix}{r}_{YY} \left(1, 1, {N}_{o}\right) & ⋯ & {r}_{YY} \left(1, I, {N}_{o}\right) \\ ⋮ & ⋱ & ⋮ \\ {r}_{YY} \left(I, 1, {N}_{o}\right) & ⋯ & {r}_{YY} \left(I, I, {N}_{o}\right)\end{matrix}\right]$ .

For a signal collected by the *i*^{th} real microphone and a signal collected by the *k*^{th} virtual microphone, a cross-correlation coefficient between the two can be denoted as *r_{YD}*(*k, i, Nₒ*)*. r_{YD}*(*k, i, Nₒ*) can satisfy the following formulas: *r_{YD}*(*k, i, Nₒ*) = [*r'_{YD}* (*k, i,* 1) ··· *r'_{YD}*(*k, i, n*) ··· *r'Y_{D}*(*k, i, Nₒ*)] and $r {′}_{YD} \left(k, i, n\right) = \frac{1}{L} {\sum }_{l = 1}^{L} {y}_{k} \left(l\right) {d}_{i} \left(l-n\right)$. Correspondingly, *R_{YD}* is an *I* × *Nₒ* × *K*-order matrix.

For a signal collected by the *i*₁^{th} real microphone and a signal collected by the *i*₂^{th} real microphone, a cross-correlation coefficient between the two can be denoted as *r_{YY}*(*i*₁*, i*₂*, Nₒ*). *r_{YY}*(*i*₁*, i*₂*, Nₒ*) can satisfy the following formulas: ${r}_{YY} \left({i}_{1}, {i}_{2}, {N}_{o}\right) = \left[\begin{matrix}r {′}_{YY} \left({i}_{1}, {i}_{2}, 1\right) & r {′}_{YY} \left({i}_{1}, {i}_{2}, 2\right) & ⋯ & r {′}_{YY} \left({i}_{1}, {i}_{2}, {N}_{o}\right) \\ r {′}_{YY} \left({i}_{1}, {i}_{2}, 2\right) & ⋱ & ⋮ & r {′}_{YY} \left({i}_{1},{i}_{2},{N}_{o}+1\right) \\ ⋮ & ⋯ & ⋱ & ⋮ \\ r {′}_{YY} \left({i}_{1}, {i}_{2}, {N}_{o}\right) & r {′}_{YY} \left({i}_{1},{i}_{2},{N}_{o}+1\right) & ⋯ & r {′}_{YY} \left({i}_{1},{i}_{2},2{N}_{o}-1\right)\end{matrix}\right]$ and $r {′}_{YY} \left({i}_{1}, {i}_{2}, n\right) = \frac{1}{L} {\sum }_{l = 1}^{L} {y}_{i 1} \left(l\right) {y}_{i 2} \left(l-\right.$ *n*)*.* Correspondingly, *R_{YY}* is an (*I* × *Nₒ*) × (*I* × *Nₒ*)-order square matrix.

In some possible implementations, a noise cancellation parameter indicating the sound transfer path may include at least one of *hᵢ*(*n*), *bₖ*(*g*), and *O*.

The foregoing process of determining the noise cancellation parameter in the calibration phase is merely an example. Embodiments of this application are not limited thereto.

The foregoing briefly describes a manner of calibrating the noise cancellation parameter. The following briefly describes, with reference to FIG. 10 and FIG. 11, a process of implementing active noise cancellation based on a determined noise cancellation parameter by using an active noise cancellation function as an example.

In a scenario in which *I* real microphones and J secondary source speakers are disposed in a cockpit scenario, the noise cancellation parameter corresponding to each head area may be determined in the calibration phase. In the use phase, a speaker may be controlled, based on a correspondence between the head area and the noise cancellation parameter, to output corresponding anti-noise by using a corresponding noise cancellation parameter.

For example, the active noise cancellation function is used as an example. In the use phase, the active noise cancellation may be performed based on a head area by using the corresponding noise cancellation parameter.

In an embodiment, an example in which the use phase of the active noise cancellation does not involve the observation path is used to briefly describe an implementation process of the active noise cancellation. It is assumed that L accelerometers for sensing a noise environment, *I* real microphones, and J secondary source speakers are disposed in the cockpit scenario. Correspondingly, at the moment t, a reference signal collected by the *l*^{th} accelerometer can be denoted as *rₗ*(*t*), a signal collected by the *i*^{th} real microphone can be denoted as *eᵢ*(*t*)*,* and a signal that needs to be output by the *j*^{th} secondary source speaker can be denoted as *sⱼ*(*t*), *sⱼ*(*t*) can satisfy the following formulas: ${s}_{j} \left(t\right) = {\sum }_{l = 1}^{L} {\sum }_{m = 1}^{M} {r}_{l} \left(t-m+1\right) {w}_{lj} \left(m\right) , j = 1 , … , J$ ${w}_{lj} \left(m\right) = {λ}_{1} {\sum }_{i = 1}^{I} {f}_{lij} \left(t-m+1\right) {e}_{i} \left(t\right) , l = 1 , … , L ; j = 1 , … , J ; m = 1 , … , M$ ${f}_{lij} \left(t\right) = {\sum }_{n = 1}^{N} {r}_{l} \left(t-n+1\right) {h}_{ij} \left(n\right) , l = 1 , … , L ; i = 1 , … , I$

Here, M can represent the length of a control filter coefficient *wₗⱼ*(*m*) calculated based on a to-be-updated part, *fₗᵢⱼ*(*t*) can represent the filtering reference signal, and λ₁ represents the update step. *hᵢⱼ*(*n*) can represent a secondary path between the *j*^{th} secondary source speaker and the *i*^{th} real microphone, and can be obtained by calibration in the calibration phase. Correspondingly, the relationships among the signals may be as shown in FIG. 10.

In another embodiment, an example in which the use phase of the active noise cancellation involves the observation path is used to briefly describe an implementation process of the active noise cancellation. It is assumed that L accelerometers for sensing a noise environment, *I* real microphones, and J secondary source speakers are disposed in the cockpit scenario. Correspondingly, at the moment t, a reference signal collected by the *l*^{th} accelerometer can be denoted as *rₗ*(*t*), a signal collected by the *i*^{th} real microphone can be denoted as *eᵢ*(*t*)*,* and a signal that needs to be output by the *j*^{th} secondary source speaker can be denoted as *sⱼ*(*t*)*.* In the calibration phase, K virtual microphones are also disposed in the cockpit scenario. *sⱼ*(*t*) can satisfy the following formula: ${s}_{j} \left(t\right) = {\sum }_{l = 1}^{L} {\sum }_{m = 1}^{M} {r}_{l} \left(t-m+1\right) {w}_{lj} \left(m\right) , j = 1 , … , J$ ${w}_{lj} \left(m\right) = {λ}_{2} {\sum }_{k = 1}^{K} {f}_{ljk} \left(t-m+1\right) {\hat{e}}_{k} \left(t\right) , l = 1 , … , L ; j = 1 , … , J ; m = 1 , … , M$ ${f}_{ljk} \left(t\right) = {\sum }_{n = 1}^{N} {r}_{l} \left(t-n+1\right) {b}_{jk} \left(n\right) , l = 1 , … , L ; k = 1 , … , K$ ${\hat{e}}_{k} \left(t\right) = {\sum }_{n = 1}^{N} {\sum }_{i = 1}^{I} {o}_{ik} \left(n\right) {d}_{i} \left(n\right) + {\sum }_{n = 1}^{N} {\sum }_{j = 1}^{J} {s}_{j} \left(t-n+1\right) {b}_{jk} \left(n\right) , k = 1 , … , K , i = 1 , … , I$ ${d}_{i} \left(n\right) = {e}_{i} \left(n\right) - {\sum }_{n = 1}^{N} {\sum }_{j = 1}^{J} {s}_{j} \left(t-n+1\right) {h}_{ij} \left(n\right) , k = 1 , … , K , i = 1 , … , I$ where *M* can represent the length of a control filter coefficient *wₗⱼ*(*m*) calculated based on a to-be-updated part, f*ₗⱼₖ*(*t*) can represent the filtering reference signal, *êₖ* can represent a virtual error signal corresponding to the *k*^{th} virtual microphone, and λ₂ represents the update step. *bⱼₖ*(*n*) can represent a secondary path between the *j*^{th} secondary source speaker and the *k*^{th} virtual microphone, and can be obtained by calibration in the calibration phase. *oᵢₖ*(*n*) can represent the observation path between the *i*^{th} real microphone and the *k*^{th} virtual microphone and can be obtained based on the observation filter coefficient *O*, and *dᵢ*(*n*) can represent a signal, before noise cancellation, at the position of the *i*^{th} real microphone. Correspondingly, the relationships among the signals may be as shown in FIG. 11.

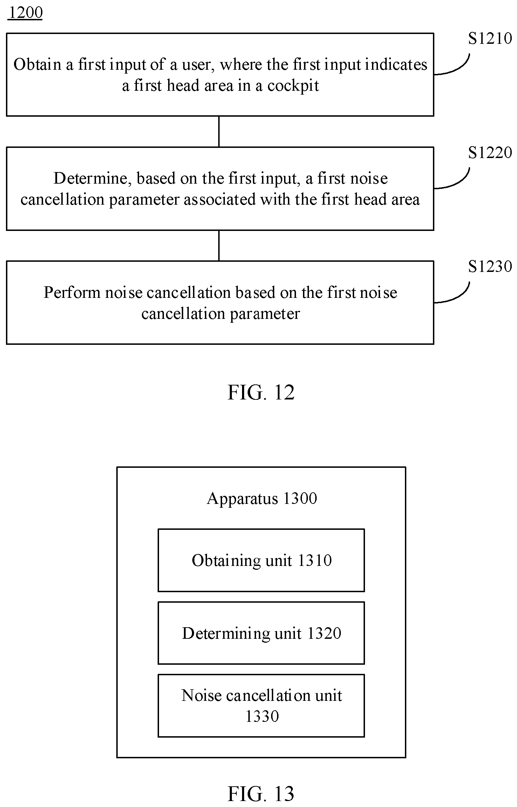

FIG. 12 is a schematic flowchart showing a noise cancellation method 1200 according to an embodiment of this application. The method 1200 may be performed by a vehicle 100; or the method 1200 may be performed by a computing platform 120; or the method 1200 may be performed by a system comprising the computing platform 120 and a prompt apparatus (for example, a display apparatus 130); or the method 1200 may be performed by a system-on-a-chip (system-on-a-chip, SoC) in the computing platform 120; or the method 1200 may be performed by a processor, a chip, or a circuit in the computing platform 120; or the method 1200 may be performed by a system comprising a cockpit domain controller (cockpit domain controller, CDC) and a digital signal processor (digital signal processor, DSP). The method 1200 includes the following steps:

S1210: Obtain a first input of a user, where the first input indicates a first head area in a cockpit.

Optionally, obtaining the first input of the user includes: obtaining a voice input of the user, a touch input for a display apparatus, and the like.

For example, as shown in FIG. 5, the first input may be a touch input by which the user selects a head area 2.

Optionally, before the obtaining the first input of the user, the method 1200 further includes: when it is detected that the user starts an application program of a preset type, controlling a prompt apparatus to prompt the user to select from a plurality of head areas, where the plurality of head areas include a first head area.

Optionally, the application program of the preset type may include an audio type application program, a video type application program, and a nap mode (or a sleep mode).

For example, as shown in FIG. 2A and FIG. 2B, when an operation of tapping an in-vehicle music application by the user is detected, a display may be triggered to display prompt information "Select a head area to improve the noise cancellation effect for you" and information about the plurality of head areas.

For example, when an operation of tapping the in-vehicle video application by the user is detected, the display may be triggered to display the prompt information "Select a head area to improve the noise cancellation effect for you".

Optionally, when it is detected that the user starts the application program of the preset type, controlling the prompt apparatus to prompt the user to select from the plurality of head areas includes: when it is detected that the user starts the application program of the preset type and a playback volume is less than or equal to a sound level threshold, controlling the prompt apparatus to prompt the user to select from the plurality of head areas.

Optionally, before the obtaining the first input of the user, the method 1200 further includes: when a speed of the vehicle is greater than or equal to a first threshold, and/or when an intensity of a vibration signal detected by an accelerometer is greater than or equal to a second threshold, controlling the prompt apparatus to prompt the user to select from a plurality of head areas, where the plurality of head areas include the first head area.

For example, when it is detected that the speed of the vehicle is greater than the first threshold (for example, 80 kph) or an amplitude of the vibration signal detected by the accelerometer is greater than a preset amplitude, the display may be triggered to display the prompt information "Select a head area to improve the noise cancellation effect for you" and the information about the plurality of head areas.

Optionally, before the obtaining the first input of the user, the method 1200 further includes: determining that all windows of the vehicle are in a closed state.

For example, when it is detected that all windows of the vehicle are in the closed state and it is detected that the user starts the application program of the preset type, the prompt apparatus is controlled to prompt the user to select from the plurality of head areas.

Optionally, before the obtaining the first input of the user, the method 1200 further includes: determining that an air conditioner is in an off state, or determining that an air exhaust speed of an air conditioner is less than or equal to a preset air exhaust speed.

Optionally, when it is determined that all windows of the vehicle are in the closed state, or it is determined that an air conditioner is in an off state, or it is determined that an air exhaust speed of an air conditioner is less than or equal to a preset air exhaust speed, a display apparatus may be controlled to display a first interface element, where the first interface element may be associated with a selection interface for the head area.

For example, as shown in FIG. 7A and FIG. 7B, the first interface element may be a control 701. When it is detected that the window of the vehicle is in the closed state, the control 701 may be displayed on the display. When an operation of tapping the control 701 by the user is detected, the display may be controlled to display the prompt information "Select a head area to improve the noise cancellation effect for you" and the information about the plurality of head area.

Optionally, when it is determined that the window of the vehicle is in an open state, or it is determined that the air exhaust speed of the air conditioner is greater than the preset air exhaust speed, the display apparatus may be controlled to hide the first interface element.

Optionally, before the obtaining the first input of the user, the method further includes: performing noise cancellation based on a second noise cancellation parameter, where the second noise cancellation parameter is associated with a second head area; obtaining first data collected by a sensor in the cockpit; and when it is determined, based on the first data, that the head position of the user is in the first head area, controlling the prompt apparatus to prompt the user to select from a plurality of head areas, where the plurality of head areas include the first head area
When it is determined, based on the first data, that the head position of the user is in the first head area, controlling the prompt apparatus to prompt the user to select from the plurality of head areas may also be understood as: when it is determined, based on the first data, that the head position of the user is not in the second head area, controlling the prompt apparatus to prompt the user to select from the plurality of head areas, or may be understood as: when it is determined, based on the first data, that the head position of the user is in an area other than the second head area, controlling the prompt apparatus to prompt the user to select from the plurality of head areas.

For example, the second head area may be a head area previously selected by the user through the selection interface for the head area, or the second head area may be a head area previously memorized as a preference of the user, or the second head area may be a default head area (for example, an area around an error microphone on a seat headrest).

S1220: Determine, based on the first input, a first noise cancellation parameter associated with the first head area.

Optionally, the first noise cancellation parameter may include at least one of a secondary path coefficient, a path coefficient of a propagation path from a secondary source speaker to a virtual microphone, and an estimation result of an observation path.

Optionally, the determining, based on the first input, the first noise cancellation parameter associated with the first head area includes: determining, based on the first input and a first mapping relationship, the first noise cancellation parameter, where the first mapping relationship includes a mapping relationship between the head area and the noise cancellation parameter.

For example, Table 1 shows a mapping relationship between a head area and a noise cancellation parameter.

**Table 1**

| Seat area | Head area | Noise cancellation parameter |
|---|---|---|
| Driver area | Head area 1 | Noise cancellation parameter 1 |
| | Head area 2 | Noise cancellation parameter 2 |
| | Head area 3 | Noise cancellation parameter 3 |
| | ... | ... |
| Front passenger area | Head area 1 | Noise cancellation parameter 4 |
| | Head area 2 | Noise cancellation parameter 5 |
| | Head area 3 | Noise cancellation parameter 6 |
| | ... | ... |
| ... | ... | ... |

The foregoing Table 1 is a process of dividing different head areas in each seat area and obtaining, for the different head areas, a noise cancellation parameter corresponding to each head area in a calibration phase. Embodiments of this application are not limited thereto. For example, the head areas are divided for different seat postures of each seat area.

For example, Table 2 shows another mapping relationship between a head area and a noise cancellation parameter.

**Table 2**

| Seat area | Seat posture | Head area | Noise cancellation parameter |
|---|---|---|---|
| Driver seat | Seat posture 1 | Head area 1 | Noise cancellation parameter 1 |
| | | Head area 2 | Noise cancellation parameter 2 |
| | | Head area 3 | Noise cancellation parameter 3 |
| | | ... | ... |
| | Seat posture 2 | Head area 1 | Noise cancellation parameter 4 |
| | | Head area 2 | Noise cancellation parameter 5 |
| | | Head area 3 | Noise cancellation parameter 6 |
| | | ... | ... |
| | ... | ... | ... |
| Front passenger area | Seat posture 1 | Head area 1 | Noise cancellation parameter 7 |
| | | Head area 2 | Noise cancellation parameter 8 |
| | | Head area 3 | Noise cancellation parameter 9 |
| | | ... | ... |
| | Seat posture 2 | Head area 1 | Noise cancellation parameter 10 |
| | | Head area 2 | Noise cancellation parameter 11 |
| | | Head area 3 | Noise cancellation parameter 12 |
| | | ... | ... |
| | ... | ... | ... |
| ... | ... | ... | ... |

For example, for a same head area in different seat postures, noise cancellation parameters corresponding to the same head area may be different. For example, the head area 1 in the seat posture 1 may correspond to the noise cancellation parameter 1, and the head area 1 in the seat posture 2 may correspond to the noise cancellation parameter 4.

For a process of obtaining Table 1 and Table 2, see the foregoing calibration phase. Details are not described herein again.

The foregoing Table 1 and Table 2 are merely examples. This is not specifically limited in embodiments of this application.

Optionally, determining, based on the first input, the first noise cancellation parameter associated with the first head area includes: determining, based on the first input and the seat posture, the first noise cancellation parameter associated with the first head area in the first seat posture.

For example, when the user is located in the front passenger area and the seat posture of the front passenger seat is the seat posture 1, the noise cancellation parameter 7 may be determined based on the first input (for example, the first input indicates the head area 1) of the user.

S1230: Perform noise cancellation based on the first noise cancellation parameter.

For the foregoing process of performing the noise cancellation, refer to the foregoing use phase. Details are not described herein again.

Optionally, the method 1200 further includes: storing an association relationship between identification information of the user and the first head area.

Optionally, before storing the association relationship between the identification information of the user and the first head area, the method 1200 further includes: detecting that a number of times that the user selects the first head area is greater than or equal to a preset number of times.

Optionally, before the obtaining the first input of the user, the method 1200 further includes: obtaining a first speech instruction of the user, where the first speech instruction instructs to adjust a noise cancellation area; and controlling, based on the first speech instruction, a first display apparatus to display a first display interface, where the first display apparatus is a display apparatus in a seat area where the user is located, the first display interface includes a plurality of head areas, and the plurality of head areas include the first head area; where the obtaining the first input of the user includes: obtaining a first touch input of the user on the first display interface or obtaining a second speech instruction of the user, where the first touch input or the second speech instruction indicates the first head area.

For example, the vehicle may determine, by using a difference (for example, a delay difference or a phase difference) between speech instructions collected by a plurality of microphones in the cockpit, the seat area (for example, the driver area) where the user is located. Therefore, the vehicle may control the display apparatus in the seat area to display the information about the plurality of head areas. This makes it convenient for the user to select a corresponding head area from the seat area where the user is located, thereby helping improve user experience.

Optionally, before the obtaining the first input of the user, the method 1200 further includes: controlling a second display apparatus to display a second display interface, where the second display interface includes a first display area and a second display area, the first display area includes information about a plurality of seat areas, and the second display area includes the information about the plurality of head areas; the plurality of head areas include the first head area, the plurality of seat areas include a first seat area, and the first input indicates the first seat area and the first head area; where determining, based on the first input, the first noise cancellation parameter associated with the first area includes: determining, based on the first input, the first noise cancellation parameter associated with the first head area in the first seat area.

For example, the second display interface may be the HMI shown in FIG. 4B, the first display area may be the area 402, and the second display area may be the area 401. The HMI includes the area 401 and the area 402. The area 401 includes the information about the plurality of head areas, and the area 402 includes the information about the plurality of seat areas. When operations of selecting the head area 1 and selecting the driver area by the user are detected, a corresponding noise cancellation parameter may be determined by using the mapping relationship shown in Table 1 or Table 2.

Optionally, before the obtaining the first input of the user, the method further includes: controlling a third display apparatus to display a third display interface, where the third display interface includes the information about the plurality of seat areas; and obtaining a second touch input of the user on the third display interface, where the second touch input indicates a second seat area, and the plurality of seat areas include the second seat area; controlling, based on the second touch input, the third display apparatus to display a fourth display interface, where the fourth display interface includes the information about the plurality of head areas in the second seat area, and the plurality of head areas include the first head area; where the obtaining the first input of the user includes: obtaining a third touch input of the user on the fourth display interface or obtaining a third voice input of the user, where the third touch input or the third voice input indicates the first head area.

For example, the third display interface may be the display interface shown in FIG. 3A, and the second touch input may be a touch input for the driver area.

For example, the fourth display interface may be the display interface shown in FIG. 3B, and the third touch input or the third voice input may be an input for the head area 1.

Optionally, the obtaining the first input of the user includes: obtaining the first input of the user on an electronic device.

For example, the electronic device may be a mobile phone or a tablet. For example, the electronic device is a tablet. The tablet located on a left side of a second row (The tablet may be suspended on a rear side of a seat back of a driver) may store a coordinate location of the tablet in a vehicle coordinate system. The tablet may determine, by using data collected by a camera of the tablet, a coordinate location of the head position or a human ear position of the user in the vehicle coordinate system, and prompt the user with the plurality of head areas and the current head position of the user by using a display of the tablet. The user located on the left side of the second row may determine, based on content displayed on the display of the tablet, a target head area from the plurality of head areas. The tablet may send information about the target head area to the vehicle, so that the vehicle may determine a target noise cancellation parameter based on the target head area, and perform noise cancellation based on the target noise cancellation parameter.

For example, the electronic device is a mobile phone. The mobile phone may determine, based on an angle of arrival (angle of arrival, AOA) technology, location information (for example, located in the front passenger area) of the mobile phone in the cockpit. In addition, the mobile phone may determine, based on the data collected by the camera of the mobile phone, the head position or the human ear position of the user. The mobile phone may display, on the display of the mobile phone, the location of the mobile phone in the cockpit, the head position of the user, and the information about the plurality of head areas. After detecting that the user selects the target head area from the plurality of head areas, the mobile phone may send the information about the target head area to the vehicle, so that the vehicle may determine the target noise cancellation parameter based on the target head area, and perform noise cancellation based on the target noise cancellation parameter.

Optionally, the method 1200 further includes: controlling the prompt apparatus to prompt the user with the head position of the user and the plurality of head areas, where the head position of the user is determined by second data collected by the sensor in the cockpit.

For example, as shown in FIG. 5, the vehicle may control, based on the data collected by the sensor in the cockpit, the display to display a sitting posture of the user. Therefore, the user may select, based on the posture displayed on the display, an appropriate head area.

When the foregoing method 1200 is performed by a system comprising the CDC and the DSP, S1210 may be a step performed by the CDC, and S1220 and S1230 may be steps performed by the DSP. For example, the CDC may determine, based on button and touch controls of the user on the display, that the user selects the head area 1, so that the CDC may send information about the head area 1 to the DSP. The DSP may determine the noise cancellation parameter 1 based on the head area 1 and the mapping relationship, and perform noise cancellation based on the noise cancellation parameter 1.

FIG. 13 is a schematic block diagram showing a noise cancellation apparatus 1300 according to this application. The apparatus 1300 includes: an obtaining unit 1310, configured to obtain a first input of a user, where the first input indicates a first head area in a cockpit; a determining unit 1320, configured to determine, based on the first input, a first noise cancellation parameter associated with the first head area; and a noise cancellation unit 1330, configured to perform noise cancellation based on the first noise cancellation parameter.

Optionally, the apparatus 1300 further includes: a first detection unit, configured to detect, before the obtaining unit obtains the first input, that the user starts an application program of a preset type; and a first control unit, configured to control a prompt apparatus to prompt the user to select from a plurality of head areas, where the plurality of head areas include the first head area.

Optionally, the apparatus 1300 further includes: a second detection unit, configured to detect, before the obtaining unit obtains the first input, that a speed of the vehicle is greater than or equal to a first threshold, and/or that an intensity of a vibration signal detected by an accelerometer is greater than or equal to a second threshold; and a second control unit, configured to control the prompt apparatus to prompt the user to select from a plurality of head areas, where the plurality of head areas include the first head area.

Optionally, the apparatus 1300 further includes a third control unit; the noise cancellation unit 1330 is further configured to: before the obtaining unit obtains the first input, perform noise cancellation based on a second noise cancellation parameter, where the second noise cancellation parameter is associated with a second head area; the obtaining unit 1310 is further configured to obtain first data collected by a sensor in the cockpit; and when the determining unit determines, based on the first data, that a head position of the user is in the first head area, the third control unit is further configured to control the prompt apparatus to prompt the user to select from a plurality of head areas, where the plurality of head areas include the first head area.

Optionally, the apparatus 1330 further includes a storage unit, configured to store an association relationship between identification information of the user and the first head area.

Optionally, the apparatus 1330 further includes a fourth control unit; the obtaining unit 1310 is configured to obtain, before the obtaining unit obtains the first input, a first speech instruction of the user, where the first speech instruction instructs to adjust a noise cancellation area; the fourth control unit is configured to control, based on the first speech instruction, a first display apparatus to display a first display interface, where the first display apparatus is a display apparatus in a seat area where the user is located, the first display interface includes a plurality of head areas, and the plurality of head areas include the first head area; and the obtaining unit 1310 is specifically configured to obtain a first touch input of the user on the first display interface or obtain a second speech instruction of the user, where the first touch input or the second speech instruction indicates the first head area.

Optionally, the apparatus 1300 further includes a fifth control unit; the fifth control unit is configured to control, before the obtaining unit obtains the first input, a second display apparatus to display a second display interface, where the second display interface includes a first display area and a second display area, the first display area includes information about a plurality of seat areas, and the second display area includes information about the plurality of head areas; the plurality of head areas include the first head area, the plurality of seat areas include a first seat area, and the first input indicates the first seat area and the first head area; and the determining unit 1320 is specifically configured to determine, based on the first input, the first noise cancellation parameter associated with the first head area in the first seat area.

Optionally, the apparatus 1300 further includes a sixth control unit; the sixth control unit is configured to control, before the obtaining unit obtains the first input, a third display apparatus to display a third display interface, where the third display interface includes the information about the plurality of seat areas; the obtaining unit 1310 is further configured to obtain a second touch input of the user on the third display interface, where the second touch input indicates a second seat area, and the plurality of seat areas include the second seat area; the sixth control unit is further configured to control, based on the second touch input, the third display apparatus to display a fourth display interface, where the fourth display interface includes the information about the plurality of head areas in the second seat area, and the plurality of head areas include the first head area; and the obtaining unit 1310 is specifically configured to obtain a third touch input of the user on the fourth display interface or obtain a third voice input of the user, where the third touch input or the third voice input indicates the first head area.

Optionally, the obtaining unit 1310 is specifically configured to obtain the first input of the user on an electronic device.

Optionally, the determining unit 1320 is specifically configured to determine, based on the first input and a first mapping relationship, the first noise cancellation parameter, where the first mapping relationship includes a mapping relationship between the head area and the noise cancellation parameter.

Optionally, the apparatus 1300 further includes a seventh control unit, where the seventh control unit is configured to control the prompt apparatus to prompt the user with the head position of the user and the plurality of head areas, where the head position of the user is determined by second data collected by the sensor in the cockpit.

For example, the obtaining unit 1310 may be the computing platform in FIG. 1, or a processing circuit, a processor, or a controller in the computing platform. For example, the obtaining unit 1310 is a processor 121 in the computing platform. The processor 121 may obtain the first input of the user, and the first input indicates the first head area. For example, the processor 121 may obtain the touch input of the user on the display.

For another example, the determining unit 1320 may be the computing platform in FIG. 1, or a processing circuit, a processor, or a controller in the computing platform. For example, the determining unit 1320 is a processor 122 in the computing platform. The processor 122 may determine, based on the first input obtained by the processor 121, the first noise cancellation parameter associated with the first head area. For example, the processor 122 may store the mapping relationship between the head area and the noise cancellation parameter, and the processor 122 may determine, based on the first input and the mapping relationship, the first noise cancellation parameter.

For another example, the noise cancellation unit 1330 may be the computing platform in FIG. 1, or a processing circuit, a processor, or a controller in the computing platform. For example, the noise cancellation unit 1330 is a processor 123 in the computing platform, and the processor 123 may perform noise cancellation based on the noise cancellation parameter determined by the processor 122.

A function implemented by the foregoing obtaining unit 1310, a function implemented by the foregoing determining unit 1320, and a function implemented by the foregoing noise cancellation unit 1330 may be implemented by different processors, may be implemented by a same processor, or some functions may be implemented by a same processor. This is not limited in embodiments of this application. For example, the function implemented by the obtaining unit 1310 may be implemented by a processor (for example, a processor located in the foregoing CDC), and the function implemented by the determining unit 1320 and the function implemented by the noise cancellation unit 1330 may be implemented by another processor (for example, a processor located in the foregoing DSP). It should be understood that division of the units in the foregoing apparatus is merely logical function division. During actual implementation, all or a part of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement configuration of the hardware circuit may be understood as a process in which the processor loads instructions to implement functions of a part or all of the foregoing units. In addition, the processor may alternatively be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated and implemented in a form of SoC. The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, so that the apparatus performs the methods or the steps performed in the foregoing embodiments.

Optionally, if the apparatus is located in a vehicle, the processing unit may be processors 121 to 12n shown in FIG. 1.

An embodiment of this application further provides a noise cancellation system. The noise cancellation system may include a computing platform and a noise cancellation apparatus, and the computing platform may include the noise cancellation apparatus 1300.

An embodiment of this application further provides a noise cancellation system. The noise cancellation system may include the CDC and the DSP. The CDC may include units or modules configured to implement S1210. The DSP may include units or modules configured to implement S1220 and S1230.

An embodiment of this application further provides a vehicle. The vehicle may include the foregoing noise cancellation apparatus or the noise cancellation system.

An embodiment of this application further provides a computer program product. The computer program product includes computer program code. When the computer program code is run on a computer, the computer is enabled to perform the noise cancellation method in the foregoing embodiments.

An embodiment of this application further provides a computer-readable medium. The computer-readable medium stores program code. When the computer program code is run on a computer, the computer is enabled to perform the noise cancellation method in the foregoing embodiments.

An embodiment of this application further provides a chip. The chip includes a circuit. The circuit is configured to perform the noise cancellation method in the foregoing embodiments.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A noise cancellation method, comprising:
obtaining a first input of a user, wherein the first input indicates a first head area in a cockpit;
determining, based on the first input, a first noise cancellation parameter associated with the first head area; and
performing noise cancellation based on the first noise cancellation parameter.

2. The method according to claim 1, wherein before the obtaining the first input of the user, the method further comprises:
when it is detected that the user starts an application program of a preset type, controlling a prompt apparatus to prompt the user to select from a plurality of head areas, wherein the plurality of head areas comprise the first head area.

3. The method according to claim 1 or 2, wherein before the obtaining the first input of the user, the method further comprises:
when a speed of a vehicle is greater than or equal to a first threshold, and/or when an intensity of a vibration signal detected by an accelerometer is greater than or equal to a second threshold, controlling the prompt apparatus to prompt the user to select from a plurality of head areas, wherein the plurality of head areas comprise the first head area.

4. The method according to any one of claims 1 to 3, wherein before the obtaining the first input of the user, the method further comprises:
performing noise cancellation based on a second noise cancellation parameter, wherein the second noise cancellation parameter is associated with a second head area;
obtaining first data collected by a sensor in the cockpit; and
when it is determined, based on the first data, that a head position of the user is in the first head area, controlling the prompt apparatus to prompt the user to select from a plurality of head areas, wherein the plurality of head areas comprise the first head area.

5. The method according to any one of claims 1 to 4, wherein the method further comprises:
storing an association relationship between identification information of the user and the first head area.

6. The method according to any one of claims 1 to 5, wherein before the obtaining the first input of the user, the method further comprises:
obtaining a first speech instruction of the user, wherein the first speech instruction instructs to adjust a noise cancellation area; and
controlling, based on the first speech instruction, a first display apparatus to display a first display interface, wherein the first display apparatus is a display apparatus in a seat area in which the user is located, the first display interface comprises a plurality of head areas, and the plurality of head areas comprise the first head area;
wherein the obtaining the first input of the user comprises:
obtaining a first touch input of the user on the first display interface or obtaining a second speech instruction of the user, wherein the first touch input or the second speech instruction indicates the first head area.

7. The method according to any one of claims 1 to 5, wherein before the obtaining the first input of the user, the method further comprises:
controlling a second display apparatus to display a second display interface, wherein the second display interface comprises a first display area and a second display area, the first display area comprises information about a plurality of seat areas, and the second display area comprises information about a plurality of head areas; wherein
the plurality of head areas comprise the first head area, the plurality of seat areas comprise a first seat area, and the first input indicates the first seat area and the first head area; and
determining, based on the first input, the first noise cancellation parameter associated with the first area comprises:
determining, based on the first input, the first noise cancellation parameter associated with the first head area in the first seat area.

8. The method according to any one of claims 1 to 5, wherein before the obtaining the first input of the user, the method further comprises:
controlling a third display apparatus to display a third display interface, wherein the third display interface comprises information about a plurality of seat areas;
obtaining a second touch input of the user on the third display interface, wherein the second touch input indicates a second seat area, and the plurality of seat areas comprise the second seat area; and
controlling, based on the second touch input, the third display apparatus to display a fourth display interface, wherein the fourth display interface comprises information about a plurality of head areas in the second seat area, and the plurality of head areas comprise the first head area; and
the obtaining the first input of the user comprises:
obtaining a third touch input of the user on the fourth display interface or obtaining a third voice input of the user, wherein the third touch input or the third voice input indicates the first head area.

9. The method according to any one of claims 1 to 5, wherein the obtaining the first input of the user comprises:
obtaining the first input of the user on an electronic device.

10. The method according to any one of claims 1 to 9, wherein the determining, based on the first input, the first noise cancellation parameter associated with the first head area comprises:
determining, based on the first input and a first mapping relationship, the first noise cancellation parameter, wherein the first mapping relationship comprises a mapping relationship between a head area and a noise cancellation parameter.

11. The method according to any one of claims 1 to 10, wherein the method further comprises:
controlling the prompt apparatus to prompt the user with the head position of the user and the plurality of head areas, wherein the head position of the user is determined by second data collected by the sensor in the cockpit.

12. A noise cancellation apparatus, comprising:
an obtaining unit, configured to obtain a first input of a user, wherein the first input indicates a first head area in a cockpit;
a determining unit, configured to determine, based on the first input, a first noise cancellation parameter associated with the first head area; and
a noise cancellation unit, configured to perform noise cancellation based on the first noise cancellation parameter.

13. The apparatus according to claim 12, wherein the apparatus further comprises:
a first detection unit, configured to detect, before the obtaining unit obtains the first input, that the user starts an application program of a preset type; and
a first control unit, configured to control a prompt apparatus to prompt the user to select from a plurality of head areas, wherein the plurality of head areas comprise the first head area.

14. The apparatus according to claim 12 or 13, wherein the apparatus further comprises:
a second detection unit, configured to detect, before the obtaining unit obtains the first input, that a speed of a vehicle is greater than or equal to a first threshold, and/or that an intensity of a vibration signal detected by an accelerometer is greater than or equal to a second threshold; and
a second control unit, configured to control the prompt apparatus to prompt the user to select from a plurality of head areas, wherein the plurality of head areas comprise the first head area.

15. The apparatus according to any one of claims 12 to 14, wherein the apparatus further comprises a third control unit;
the noise cancellation unit is further configured to: before the obtaining unit obtains the first input, perform noise cancellation based on a second noise cancellation parameter, wherein the second noise cancellation parameter is associated with a second head area;
the obtaining unit is further configured to obtain first data collected by a sensor in the cockpit; and
when the determining unit determines, based on the first data, that a head position of the user is in the first head area, the third control unit is configured to control the prompt apparatus to prompt the user to select from a plurality of head areas, wherein the plurality of head areas comprise the first head area.

16. The apparatus according to any one of claims 12 to 15, wherein the apparatus further comprises:
a storage unit, configured to store an association relationship between identification information of the user and the first head area.

17. The apparatus according to any one of claims 12 to 16, wherein the apparatus further comprises a fourth control unit;
the obtaining unit is configured to obtain, before the obtaining unit obtains the first input, a first speech instruction of the user, wherein the first speech instruction instructs to adjust a noise cancellation area;
the fourth control unit is configured to control, based on the first speech instruction, a first display apparatus to display a first display interface, wherein the first display apparatus is a display apparatus in a seat area in which the user is located, the first display interface comprises a plurality of head areas, and the plurality of head areas comprise the first head area; and
the obtaining unit is specifically configured to:
obtain a first touch input of the user on the first display interface or obtain a second speech instruction of the user, wherein the first touch input or the second speech instruction indicates the first head area.

18. The apparatus according to any one of claims 12 to 16, wherein the apparatus further comprises a fifth control unit;
the fifth control unit is configured to control, before the obtaining unit obtains the first input, a second display apparatus to display a second display interface, the second display interface comprises a first display area and a second display area, the first display area comprises information about a plurality of seat areas, and the second display area comprises information about a plurality of head areas;
the plurality of head areas comprise the first head area, the plurality of seat areas comprise a first seat area, and the first input indicates the first seat area and the first head area; and
the determining unit is specifically configured to:
determine, based on the first input, the first noise cancellation parameter associated with the first head area in the first seat area.

19. The apparatus according to any one of claims 12 to 16, wherein the apparatus further comprises a sixth control unit;
the sixth control unit is configured to control, before the obtaining unit obtains the first input, a third display apparatus to display a third display interface, wherein the third display interface comprises information about a plurality of seat areas;
the obtaining unit is further configured to obtain a second touch input of the user on the third display interface, wherein the second touch input indicates a second seat area, and the plurality of seat areas comprise the second seat area; and
the sixth control unit is further configured to control, based on the second touch input, the third display apparatus to display a fourth display interface, wherein the fourth display interface comprises information about a plurality of head areas in the second seat area, and the plurality of head areas comprise the first head area;
wherein the obtaining unit is specifically configured to:
obtain a third touch input of the user on the fourth display interface or obtain a third voice input of the user, wherein the third touch input or the third voice input indicates the first head area.

20. The apparatus according to any one of claims 12 to 16, wherein the obtaining unit is specifically configured to:
obtain the first input of the user on an electronic device.

21. The apparatus according to any one of claims 12 to 20, wherein the determining unit is specifically configured to:
determine, based on the first input and a first mapping relationship, the first noise cancellation parameter, wherein the first mapping relationship comprises a mapping relationship between a head area and a noise cancellation parameter.

22. The apparatus according to any one of claims 12 to 21, wherein the apparatus further comprises a seventh control unit; and
the seventh control unit is configured to control the prompt apparatus to prompt the user with the head position of the user and the plurality of head areas, wherein the head position of the user is determined by second data collected by the sensor in the cockpit.

23. A noise cancellation apparatus, comprising:
a memory, configured to store a computer program; and
a processor, configured to execute the computer program stored in the memory, so that the apparatus performs the method according to any one of claims 1 to 11.

24. A noise cancellation system, comprising a prompt apparatus and a computing platform, wherein the computing platform comprises the noise cancellation apparatus according to any one of claims 12 to 23.

25. A vehicle, comprising the noise cancellation apparatus according to any one of claims 12 to 23, or the noise cancellation system according to claim 24.

26. A computer-readable storage medium, wherein the computer-readable storage medium stores instructions, and when the instructions are executed by a processor, the processor is enabled to implement the method according to any one of claims 1 to 11.

27. A computer program product, wherein the computer program product comprises computer program code, and when the computer program code is run on a computer, the computer is enabled to perform the method according to any one of claims 1 to 11.

28. A chip, wherein the chip comprises a circuit, and the circuit is configured to perform the method according to any one of claims 1 to 11.
